# EUROPEAN PATENT APPLICATION

(11) **EP 1 445 698 A1**
(43) Date of publication of application: **11.08.2004**
(21) Application number: 03795282.7
(22) Date of filing: 03.09.2003
(51) Int. Cl.: G06F 9/48, G06F 3/06, G11B 20/10

(54) **RECORDING DEVICE AND RECORDING METHOD**

(30) Priority: 10.09.2002 JP 2002263628
(71) Applicant: Sony Corporation, Tokyo 141-0001 (JP)
(72) Inventor: KUDOU, Shigetaka, Shinagawa-ku, Tokyo 141-0001 (JP); GOTO, Takashi, Shinagawa-ku, Tokyo 141-0001 (JP)
(74) Representative: Melzer, Wolfgang, Dipl.-Ing.
(86) International application number: PCT/JP2003/011233
(87) International publication number: WO 2004/025467

(57) **Abstract**

The present invention relates to a recording apparatus and a recording method for recording content that is supplied as a stream with improved ease and without causing a loss by an apparatus controlled by a multitask operating system that does not ensure a turnaround time. An audio-data processing program 83 controls reception of audio data that is input. A recording application program 85 controls recording of the input audio data on an HDD 14. A socket service program 84-1 receives audio data from the audio-data processing program 83 under the control of a first process. Also, the socket service program 84-1 controls transfer of audio data under the control of a second process that controls transfer only while data to be transferred to the recording application program 85 is being received and that is terminated immediately upon completion of the transfer. The present invention can be applied to a recording/playback apparatus that records or plays back audio data.

## Description

### Technical Field

The present invention relates to recording apparatuses and recording methods, particularly to a recording apparatus and a recording method for recording content.

### Background Art

Conventional audio apparatuses usually include so-called embedded microcomputers. Software for allowing operation of the embedded microcomputers is optimized for embedded microcomputers, and a relatively small scale is a mainstream.

It takes too many man hours and is not appropriate to develop networking functions and GUI (graphical user interface) by a conventional designing method in order to implement an audio apparatus having networking capability and a GUI that allows easier visual recognition.

Accordingly, an operating system for embedded computers, in which networking functions and a GUI are already implemented, is often employed. In such cases, an operating system that has originally been developed for use with personal computers is ported to embedded microcomputers.

However, in operating systems developed for use with personal computers, processing of digital audio data conforming to IEC (International Electrotechnical Commission) 60958 for protection of copyright or the like associated with audio data, which is common in consumer digital audio apparatuses, is not implemented.

Furthermore, in conventional development of digital audio apparatuses, processing that incurs a large load relative to the capability of a microcomputer has often been assigned to a dedicated DSP (digital signal processor).

On the other hand, when functions of an ordinary personal computer is used, a sound chip (IC (integrated circuit) for audio processing) dedicated for processing digital audio data is hardly available, so that processing of audio data must be assigned to a CPU (central processing unit) of the personal computer. Thus, a process (application program) for implementing an audio function, such as playing back or recording audio data, must individually analyze and calculate audio data. Therefore, when a CD player function and a hard-disc recorder function is developed, audio data processing function such as function for processing audio data conforming to IEC 60958 must be developed for each of the CD player function and the hard-disc recorder function.

In an operating system for personal computers, what is called an event-driven paradigm, in which processing is activated in response to an event, is employed. When data that is constantly sent, received, or transferred, such as audio data, is handled by an apparatus controlled by such an event-driven operating system, it could occur that data cannot be processed in time.

Loss of data due to audio data not being processed in time is a critical defect in an audio product. Particularly, although sound dropout does not occur so often when load is low, for example, when a system is operating stably, sound dropout occurs considerably when the load of the system becomes larger when the load is large, for example, when another process (another application program) is activated or terminated or when a hard disc is accessed by another application program that is active.

As described above, in an apparatus controlled by a multitask operating system that includes networking functions and GUI functions and that executes a plurality of processes by time division, when content including audio data is handled as time-continuous data, i.e., what is called a stream, and the input stream is recorded, it is not possible to ensure recording without sound dropout (loss of audio data), or to ensure output of a stream without sound skipping.

Furthermore, in designing an operating system for embedded microcomputers, such as VX-Works™ or µ-i-TRON™, a designer must grasp a turnaround time needed by a task. This raises difficulty in design.

### Disclosure of Invention

The present invention has been made in view of the situation described above, and an object thereof is to allow recording of content that is supplied as a stream with improved ease and without causing a loss by an apparatus controlled by a multitask operating system that does not ensure a turnaround time.

A recording apparatus according to the present invention includes data-reception controlling means for controlling reception of input first content data under control of a first program that is controlled by an operating system; data-recording controlling means for controlling recording of the input first content data on the recording medium under control of a second program that is controlled by the operating system; and transferring means for receiving, under control of a first process that is controlled by the operating system, the first content data specified to be transferred to the data-recording controlling means from the data-reception controlling means, and for controlling transfer of the first content data under control of a second process that is controlled by the operating system, the second process controlling transfer only while data to be transferred to the data-recording controlling means is being received and the second process being terminated immediately upon completion of the transfer.

The transferring means may be a socket for controlling transfer of data from a program that is controlled by the operating system to another program that is controlled by the operating system.

The data-reception controlling means may include first storing means for storing the input first content by units of a first data length; second storing means for storing the first content data by units of a second data length that is different from the first data length; and data transferring means for converting the first content data stored in the first storing means by units of the first data length into units of the second data length and transferring the content data having been converted to the second storing means; the data-reception controlling means outputting the first content data stored in the second storing means to the transferring means by units of the second data length.

The recording apparatus may further include extracting means for extracting control information included in the input first content data so that recording of the input first content data on the recording medium is inhibited based on the control information extracted by the extracting means.

The recording apparatus may further include processing means for executing predetermined processing on the input first content data based on the control information extracted by the extracting means.

The data-reception controlling means may further control sending of the input first content data in the form of second content data that is stream data having a data format different from a data format of the first content data.

The transferring means may further include registering means for registering the first program for controlling the data reception controlling means that has requested sending of data to the transferring means, the transferring means rejecting a request for sending content data from other reception controlling means controlled by a program that is different from the first program.

The registering means of the transferring means may further register the second program for controlling the data-recording controlling means that has requested reception of data from the transferring means so that sending of data from the data-reception controlling means is permitted only when the second program has been registered.

A recording method according to the present invention includes a data-reception controlling step of controlling reception of input first content data under control of a first program that is controlled by an operating system; a data-recording controlling step of controlling recording of the input first content data on the recording medium under control of a second program that is controlled by the operating system; and a transferring step of receiving, under control of a first process that is controlled by the operating system, the first content data specified to be transferred to the second program from the first program, and of controlling transfer of the first content data under control of a second process that is controlled by the operating system, the second process controlling transfer only while data to be transferred to the second program is being received and the second process being terminated immediately upon completion of the transfer.

The second process may be a socket that controls transfer of data from a program that is controlled by the operating system to another program that is controlled by the operating system.

The first program may store the input first content data in first storing means by units of a first data length, store the first content data in second storing means by units of a second data length that is different from the first data length, convert the first content data stored in the first storing means by units of the first data length into units of the second data length and transfers the first content data having been converted to the second storing means, and output the first content data stored in the second storing means to the first process by units of the second data length.

The recording method may further include an extracting step of extracting control information included in the input first content data.

Recording of the input first content data on the recording medium may be inhibited based on the control information extracted in the extracting step.

The recording method may further include a processing step of executing predetermined processing on the input first content data based on the control information extracted in the extracting step.

The second program may further control sending of the input first content data in the form of second content data that is stream data having a data format different from a data format of the first content data.

The second process may further include a registering step of registering the first program that has requested sending of data to the second process so that the second process rejects a request for sending content data from a program that is different from the first program.

The second process may further register the second program that has requested reception of data from the transferring step so that the second process permits sending of data from the first program only when the second program has been registered.

In the recording apparatus or recording method according to the present invention, input first content data is received under control of a first program that is controlled by an operating system, the input first content data is recorded on a recording medium under control of a second program that is controlled by the operating system, the first content data specified to be transferred is received under control of a first process that is controlled by the operating system, and the first content data is transferred under control of a second process that controls transfer only while data to be transferred is being received and that is terminated immediately upon completion of the transfer.

Accordingly, for example, content that is supplied as a stream can be recorded with improved ease and without causing a loss by a recording/playback apparatus controlled by a multitask operating system that does not ensure a turnaround time.

### Brief Description of the Drawings

Fig. 1 is a block diagram showing the configuration of a recording/playback apparatus according to an embodiment of the present invention.
Fig. 2 is a diagram showing a schematic flow of audio data in the recording/playback apparatus.
Fig. 3 is a block diagram showing the scheme of functions of programs executed by a CPU.
Fig. 4 is a diagrams showing relationship among an audio-data processing program, application programs, and sockets.
Fig. 5 is a block diagram showing programs and functions included in the audio-data processing program.
Fig. 6 is a flowchart showing processing for registration by a playback application program.
Fig. 7 is a flowchart showing processing for confirmation of a registration ID included in a message.
Fig. 8 is a flowchart showing processing for executing processing corresponding to a command included in a message.
Fig. 9 is a diagram showing the structure of a message.
Fig. 10 is a flowchart showing the scheme of processing for sending audio data from the playback application program to the audio-data processing program.
Fig. 11 is a flowchart showing the scheme of processing for sending audio data from the audio-data processing program to a recording application program.
Fig. 12 is a flowchart showing processing for activating the audio-data processing program.
Fig. 13 is a flowchart showing processing of a message.
Fig. 14 is a flowchart showing processing for reading audio data from a sound card.
Fig. 15 is a diagram showing the format of audio data read from the sound card.
Fig. 16 is a diagram showing how audio data is stored in a read data buffer.
Fig. 17 is a diagram showing how audio data is stored in the read data buffer.
Fig. 18 is a flowchart showing processing for analyzing and processing audio data.
Fig. 19 is a flowchart showing processing for analyzing and processing audio data.
Fig. 20 is a flowchart showing processing for analyzing and processing audio data.
Fig. 21 is a diagram showing the structure of audio data stored in a record data buffer or a playback data buffer.
Fig. 22 is a diagram showing the structure of a header section of audio data stored in the record data buffer or the playback data buffer.
Fig. 23 is a diagram showing the structure of a subcode Q in a case where category is CD.
Fig. 24 is a diagram showing the structure of a subcode Q in a case where category is MD.
Fig. 25 is a flowchart showing processing for sending audio data stored in the record data buffer.
Fig. 26 is a diagram showing an example of processing in a case where a socket is not used.
Fig. 27 is a diagram showing an operation of a socket.
Fig. 28 is a diagram showing an operation of a socket.
Fig. 29 is a diagram showing an operation of a socket.
Fig. 30 is a diagram showing an example of a pattern indicating completion of playback.
Fig. 31 is a flowchart showing conventional processing for recording.
Fig. 32 is a flowchart showing processing for recording by the recording application program.
Fig. 33 is a flowchart showing processing for receiving audio data by a socket service program.
Fig. 34 is a flowchart showing processing for transferring audio data by a socket service program.
Fig. 35 is a diagram showing processing for obtaining an elapsed recording time.
Fig. 36 is a flowchart showing processing for receiving audio data from the playback application program.
Fig. 37 is a diagram showing an operation of a socket.
Fig. 38 is a diagram showing an operation of a socket.
Fig. 39 is a flowchart showing processing for reading audio data by the playback application program.
Fig. 40 is a diagram showing processing for obtaining an elapsed playback time.

### Best Mode for Carrying Out the Invention

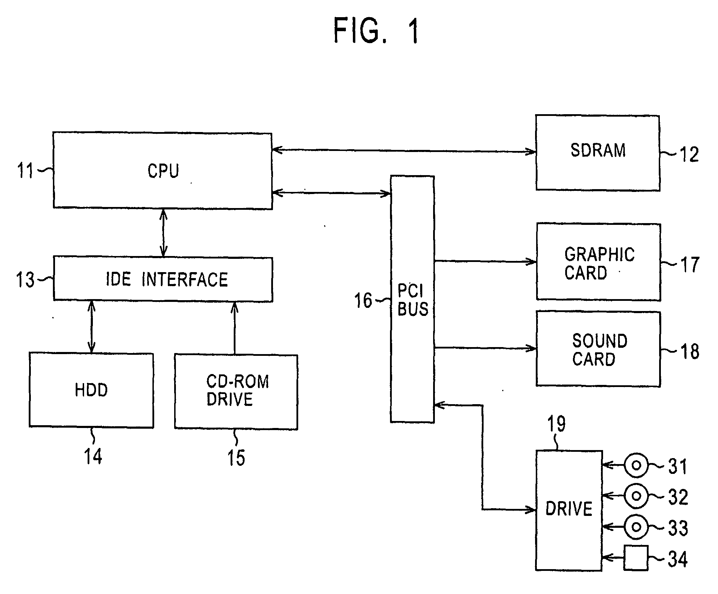

Fig. 1 is a diagram showing the configuration of a recording/playback apparatus according to an embodiment of the present invention.

A CPU (central processing unit) 11 actually executes specified processing by executing various programs stored in an SDRAM (synchronous dynamic random access memory) 12, such as an operating system that is a basic program for allowing operation of the recording/playback apparatus and various application programs that will be described later. Furthermore, the CPU 11 controls the entire recording/playback apparatus. As the operating system, for example, LINUX OS, which is a so-called multitask operating system originally developed for use with personal computers, can be used.

The SDRAM 12 stores programs executed by the CPU 11, and parameters and data needed for the execution of programs.

The SDRAM 12 may be other types of DRAM or SRAM (static RAM), such as RD-RAM (Rambus™ DRAM).

An IDE (Integrated Device Electronics) interface 13 is an interface for connecting a recording medium compliant with ATA (AT Attachement). The IDE interface 13 is connected to the CPU 11, an HDD (hard disc drive) 14, and a CD-ROM (compact disc-read only memory) drive 15.

The HDD 14 records thereon an operating system and various application programs executed by the CPU 11. The HDD 14 reads programs recorded thereon and supplies the programs to the CPU 11.

The HDD 14 drives a hard disc included therein, and thereby records data supplied from the CPU 11 on the hard disc, or reads data recorded on the hard disc and supplies the data to the CPU 11, via the IDE interface 13. For example, the HDD 14 records content (musical piece), such as audio data, supplied from the CPU 11, on the hard disc, or reads audio data recorded on the hard disc and supplies the audio data to the CPU 11.

The CD-ROM drive 15 reads data recorded on a CD-ROM or a CD (compact disc) mounted thereon, and supplies the data to the CPU 11 via the IDE interface 13. For example, the CD-ROM drive 15 reads content (musical piece), such as audio data, recorded on a CD mounted thereon, and supplies the audio data to the CPU 11 via the IDE interface 13.

A PCI (Peripheral Component Interconnect) bus 16 is a bus for connecting an extension device or the like, such as an add-in card, to the recording/playback apparatus. The PCI bus 16 is connected to a graphic card 17, a sound card 18, and a drive 19.

The graphic card 17 generates signals for displaying an image or text on a display that is not shown, based on data supplied from the CPU 11 via the PCI bus 16, and controls the display so that the image or text is displayed.

The sound card 18 supplies data supplied from the CPU 11 via the PCI bus 16 to a DAC (digital to analog converter) 52 that will be described later. Furthermore, the sound card 18 obtains data supplied from an external playback apparatus 51 that will be described later, and supplies the data to the CPU 11 via the PCI bus 16.

The sound card 18 outputs time-continuous data, that is, what is called stream audio data, conforming to the IEC (International Electrotechnical Commission) 60958 Standard. The sound card 18 receives input of time-continuous stream audio data conforming to the IEC 60958 Standard.

The drive 19 reads programs recorded on a magnetic disc 31, an optical disc 32, a magneto-optical disc 33, or a semiconductor memory 34 mounted thereon, and supplies data obtained to the CPU 11 or the SDRAM 12 via the PCI bus 16.

Hereinafter, processing executed by the recording/playback apparatus for recording or playing back audio data as an example of content will be described. However, content is not limited to audio data, and may be, for example, moving-picture data or numeric data.

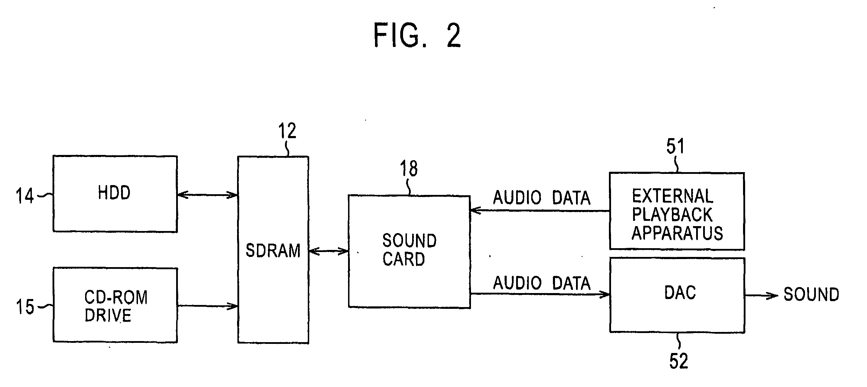

Fig. 2 is a diagram showing a schematic flow of audio data in the recording/playback apparatus.

For example, when stream audio data of content (musical piece) is obtained from an external playback apparatus 51 such as a CD player or an MD (mini disc) player and the audio data is recorded on the HDD 14, the audio data is input from the sound card 18, and is supplied to the SDRAM 12 from the sound card 18 by DMA (direct memory access). The audio data temporarily stored in the sound card 18 is supplied to the HDD 14 and is recorded on the HDD 14.

When the audio data recorded on the HDD 14 is output to an external apparatus, for example, the DAC (digital to analog converter) 52, that is, when audio data of content (musical piece) is played back, the HDD 14, under the control of the CPU 11, reads the audio data recorded thereon and supplies the audio data to the SDRAM 12.

Similarly, when audio data recorded on a CD mounted on the CD-ROM drive 15 is played back, the CD-ROM drive 15, under the control of the CPU 11, reads the audio data recorded on the CD and supplies the audio data to the SDRAM 12.

The SDRAM 12 stores the audio data supplied from the HDD 14 or the CD-ROM drive 15.

The audio data stored in the SDRAM 12 is supplied to the sound card 18 by DMA. The sound card 18 outputs the audio data supplied from the SDRAM 12 to the DAC 52 as a stream. The DAC 52 performs digital to analog conversion on the audio data, thereby generating audio signals. For example, the DAC 52 supplies the audio signals to a loud speaker that is not shown so that the loud speaker will output sound.

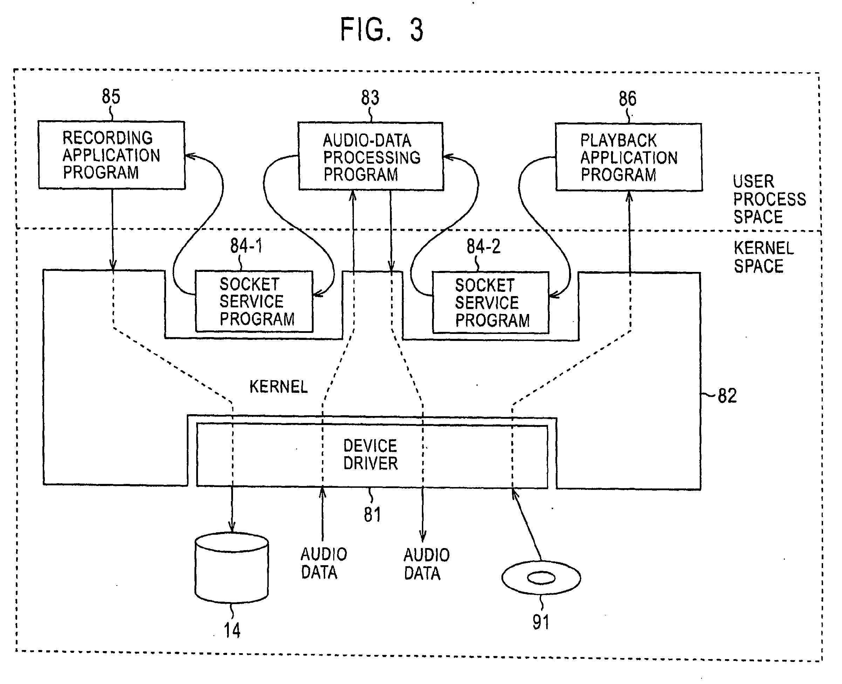

Fig. 3 is a block diagram showing the configuration of the functions of programs executed by the CPU 11.

A device driver 81 is a program for controlling the IDE interface 13, the HDD 14, the CD-ROM drive 15, the graphic card 17, and the sound card 18 based on requests from a kernel 82. Actually, the IDE interface 13, the HDD 14, the CD-ROM drive 15, the graphic card 17, and the sound card 18 are controlled individually by their respective device drivers. In this specification, the individual device drivers will be collectively referred to as the device driver 81.

The kernel 82 is a main program of the operating system (basic program). The kernel 82 provides functions needed for the operation of the recording/playback apparatus, such as control of various devices, file system, execution and monitoring of user processes, and memory management.

A process herein refers to a program execution unit that independently occupies memory resources, disc resources, I/O resources, and other resources in a multitask operating system. In a multitask operating system, memory spaces and I/O spaces that are apparently independent are allocated to processes associated with respective programs being executed, so that the respective programs appear to be operating individually. Thus, the programs need not consider relationship with other programs that are executed concurrently.

Processes include user processes activated by users, and system processes for executing part of the functions of the operating system as independent processes.

For example, the kernel 82 executes management of initiation and termination of processing, management of devices, system control such as problem management, exception processing, process management, and management of execution of interprocess communication. The kernel 82 executes an audio-data processing program 83, a recording application program 85, and a playback application program 86, which are user processes, by time division with processes as units.

The audio-data processing program 83, when audio data supplied from the outside is to be recorded, obtains audio data supplied as a stream from the outside via the device driver 81 and the kernel 82, and supplies the audio data to the recording application program 85 via a socket service program 84-1. Furthermore, the audio-data processing program 83, when audio data is to be output to the outside so that the audio data will be played back by an external apparatus, obtains audio data from the playback application program 86 via a socket service program 84-2, and causes the sound card 18 to output the audio data as a stream to the outside via the kernel 82 and the device driver 81.

The audio-data processing program 83 is software commonly used by a plurality of programs (processes), for example, a CD player application such as the playback application program 86 and an HD recorder application such as the recording application program 85. In order to allow the processes to commonly use the audio-data processing program 83, the audio-data processing program 83 uses an interprocess communication scheme called socket, which will be described later.

Accordingly, common processing such as analysis, calculation, and other processing of audio data, which usually must be executed individually by respective application programs, can be assigned entirely to the audio-data processing program 83.

This serves to avoid implementing common processing in each of the recording application program 85 and the playback application program 86. That is, common usage of resources is allowed.

The socket service program 84-1 is a program for establishing a socket with the audio-data processing program 83 as input and the recording application program 85 as output. The socket established by the socket service program 84-1 transfers audio data from the audio-data processing program 83 to the recording application program 85.

Furthermore, the socket is used for exchanging messages between the audio-data processing program 83 and the recording application program 85.

The socket service program 84-2 is a program for establishing a socket with the playback application program 86 as input and the audio-data processing program 83 as output. The socket established by the socket service program 84-2 transfers audio data from the playback application program 86 to the audio-data processing program 83.

Furthermore, the socket is used for exchanging messages between the audio-data processing program 83 and the playback application program 86.

The socket service programs 84-1 and 84-2 are provided, for example, as API (application programming interface) of a shared library together with the operating system.

In the recording/playback apparatus according to the present invention, the processing executed by the audio-data processing program 83 appears to be executed immediately without a delay when viewed from the playback application program 86. Similarly, the processing executed by the audio-data processing program 83 appears to be executed immediately without a delay when viewed from the recording application program 85.

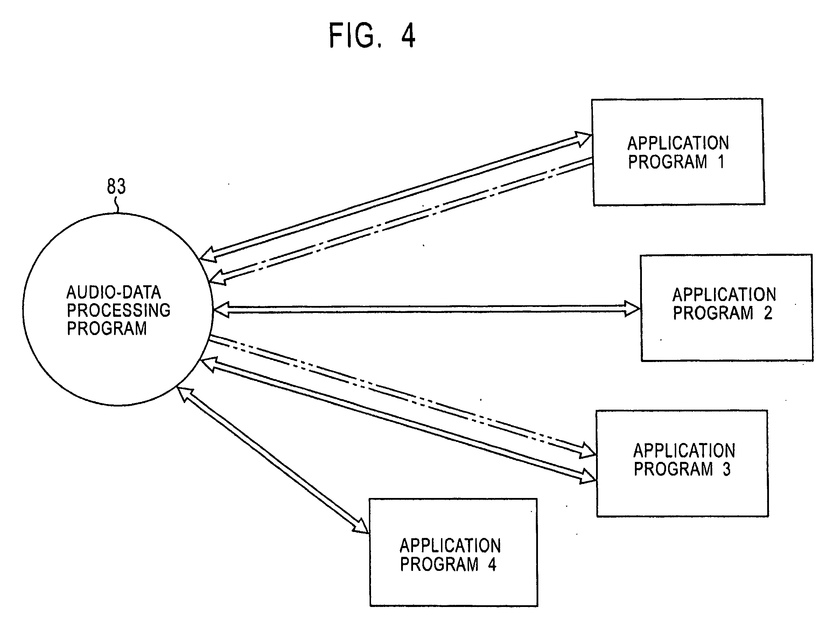

Fig. 4 is a diagram showing an example of relationship among the audio-data processing program 83, application programs, and sockets. In Fig. 4, each solid line represents a socket for exchanging messages between the audio-data processing program 83 and one of application programs 1 to 4.

In Fig. 4, a single-dotted line represents a socket for supplying audio data from the application program 1 to the audio-data processing program 83. In Fig. 4, a double-dotted line represents a socket for supplying audio data from the audio-data processing program 83 to the application program 3.

Sockets for exchanging messages with the audio-data processing program 83 are provided respectively for the application programs 1 to 4. However, only one socket for allowing the audio-data processing program 83 to send audio data is provided, the socket being associated with one application program for executing processing for recording among a plurality of application programs. Furthermore, only one socket for allowing the audio-data processing program 83 to receive audio data is provided, the socket being associated with one application program for executing processing for playback among a plurality of application programs.

This prevents loss of audio data due to interception by another application program, and also prevents sound skipping due to audio data being mixed with other audio data supplied from another application program.

Processing for exclusively establishing a socket for sending audio data will be described later.

The sockets may be implemented by, for example, Socket developed on BSD UNIX®, WinSock developed by US Microsoft™ Corporation, or OpenTransport employing the STREAM architecture developed on Unix® System V.

Sockets are generally used for communications among a plurality of processes, and are often implemented as a part of the Internet Protocol. One of the advantages of using sockets is that sockets readily allow transfer of a large volume of data. Sockets will be described later in more detail.

The recording application program 85 is a program for recording audio data supplied from the audio-data processing program 83 on the HDD 14 via a socket provided by the socket service program 84-1. The recording application program 85 supplies audio data obtained to the HDD 14 via the kernel 82 and the device driver 81. The HDD 14 records the audio data supplied from the recording application program 85 via the kernel 82 and the device driver 81.

More specifically, when the recording application program 85 has requested, by a system call, the kernel 82 to record audio data, the kernel 82 causes the device driver 81 to control recording of audio data on the HDD 14.

The playback application program 86, via the kernel 82 and the device driver 81, causes the CD-ROM drive 15 to read audio data from a CD 91 mounted thereon, thereby obtaining the audio data. Alternatively, the playback application program 86, via the kernel 82 and the device driver 81, causes the HDD 14 to read audio data recorded thereon, thereby obtaining the audio data.

More specifically, when the playback application program 86 has requested, by a system call, the kernel 82 to read audio data from the CD-ROM drive 15, the kernel 82 causes the device driver 81 to control reading of audio data recorded on a CD mounted on the CD-ROM drive 15. Alternatively, when the playback application program 86 has requested, by a system call, the kernel 82 to read audio data from the HDD 14, the kernel 82 causes the device driver 81 to control reading of audio data from the HDD 14.

The playback application program 86 supplies the audio data obtained to the audio-data processing program 83 via a socket provided by the socket service program 84-2.

The audio-data processing program 83 requests the kernel 82 to output the audio data supplied from the playback application program 86. The kernel 82 causes the device driver 81 to control the sound card 18 so that the audio data will be output as a stream.

A virtual space controlled by programs executed by the CPU 11 can be classified into a kernel space and a user process space. The kernel space is controlled by the operating system, mainly by the kernel 82. On the other hand, in the user process space, ordinary application programs other than the operating system are executed.

For example, in the kernel space, the device driver 81 and the kernel 82 constituting the operating system, and the socket service program 84-1 and the socket service program 84-2 are executed. The audio-data processing program 83, the recording application program 85, and the playback application program 86, which are ordinary application programs, are executed in the user process space.

A system call refers to a procedure for an ordinary application program executed in the user process space to issue a request for a service to the operating system executed in the kernel space. For example, transfer of audio data between the user process space and the kernel space, or control of devices such as the HDD 14, the CD-ROM drive 15, and the sound card 18 are executed by system calls. For example, transfer of audio data between the audio-data processing program 83 and the kernel 82 is executed by a system call from the audio-data processing program 83 to the kernel 82. Also, control of the sound card 18 is executed by system calls.

In this specification, system calls include so-called library calls and kernel calls.

Next, the scheme of the audio-data processing program 83 will be described.

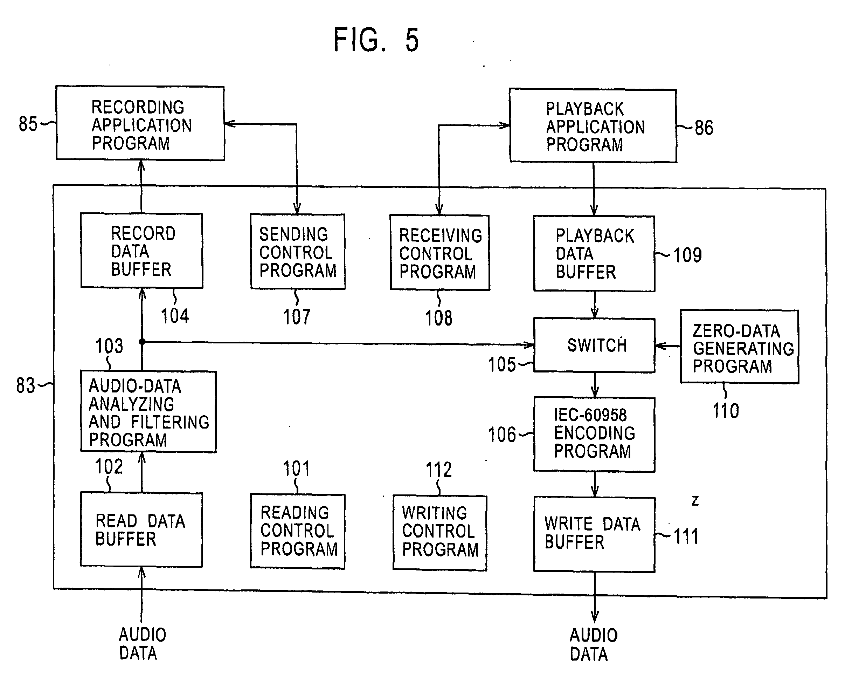

Fig. 5 is a block diagram showing programs and functions included in the audio-data processing program 83.

A reading control program 101 controls reading of audio data from the sound card 18, thereby reading audio data read from the sound card 18 that has obtained a stream conforming to IEC 60958 and storing the audio data in a read data buffer 102.

The read data buffer 102 temporarily stores audio data read from the sound card 18, by units of subframe. The read data buffer 102 can be implemented, for example, in the form of what is called a ring buffer.

For example, the read data buffer 102 is a ring buffer composed of N buffers (buffers that serve as units for storing data). The latest audio data is sequentially stored in the first buffer, the second buffer, the third buffer, the fourth buffer, and so forth in order. When audio data has filled up to the N-th buffer, audio data is next stored in the first buffer again. Thus, in the ring buffer, the N buffers form a logical ring, and processing for storing audio data and processing for reading audio data are executed along the logical ring.

For this purpose, a write pointer that indicates a position where audio data is to be stored next on the ring buffer, and a read pointer that indicates a position where audio data is to be read from next on the ring buffer, are provided for each ring buffer.

Based on the position indicated by the write pointer and the position indicated by the read pointer, that is, based on the value of the write pointer and the value of the read pointer, it can be determined whether the ring buffer is empty or full.

An audio-data analyzing and filtering program 103 analyzes data representing features of audio data included in the audio data stored in the read data buffer 102, and adds data corresponding to the result of analysis to the audio data. The audio-data analyzing and filtering program 103 supplies the audio data with the data corresponding to the result of analysis to an IEC-60958 encoding program 106 via a record data buffer 104 or a switch 105.

The record data buffer 104 temporarily stores audio data to be supplied to the recording application program 85. The record data buffer 104 can be implemented, for example, in the form of what is called a ring buffer.

The audio-data processing program 83, when new audio data to be sent to the recording application program 85 does not exist in the record data buffer 104, causes a delay in processing for reading by the recording application program 85.

When the recording application program 85 does not or cannot read audio data even though new audio data is sequentially stored in the record data buffer 104, audio data is held until the record data buffer 104 becomes full.

Thus, sound dropout of audio data (content (musical piece)) recorded by the recording application program 85 is prevented.

The audio-data processing program 83 need not be constantly synchronized with the recording application program 85, and it prevents sound dropout when the recording application program 85 fails to ensure real-time audio streaming for certain reasons.

A sending control program 107 is a program for controlling supply of audio data stored in the record data buffer 104 to the recording application program 85. More specifically, the sending control program 107 supplies newly stored audio data to the recording application program 85 each time new audio data is stored in the record data buffer 104, from when the recording application program 85 specifies a recording start position to when the recording application program 85 specifies a recording end position, that is, while the recording application program 85 is executing processing for recording.

The sending control program 107 exchanges messages with the recording application program 85 when it controls supply of audio data to the recording application program 85.

A receiving control program 108 is a program for obtaining audio data from the playback application program 86 and storing the audio data in a playback data buffer 109. The receiving control program 108 exchanges messages with the playback application program 86 during processing for obtaining audio data from the playback application program 86.

The playback data buffer 109 temporarily stores audio data supplied from the playback application program 86. The playback data buffer 109 can be implemented, for example, in the form of what is called a ring buffer.

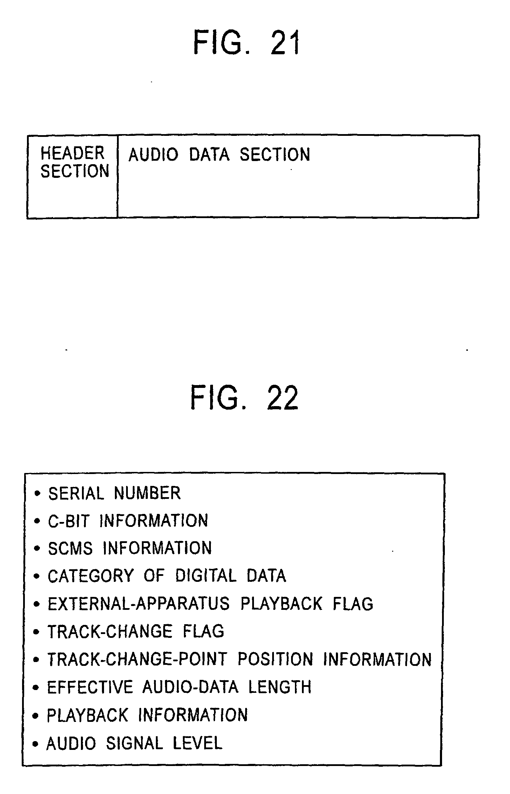

The record data buffer 104 and the playback data buffer 109 store audio data having a structure that will be described later with reference to Figs. 21 and 22.

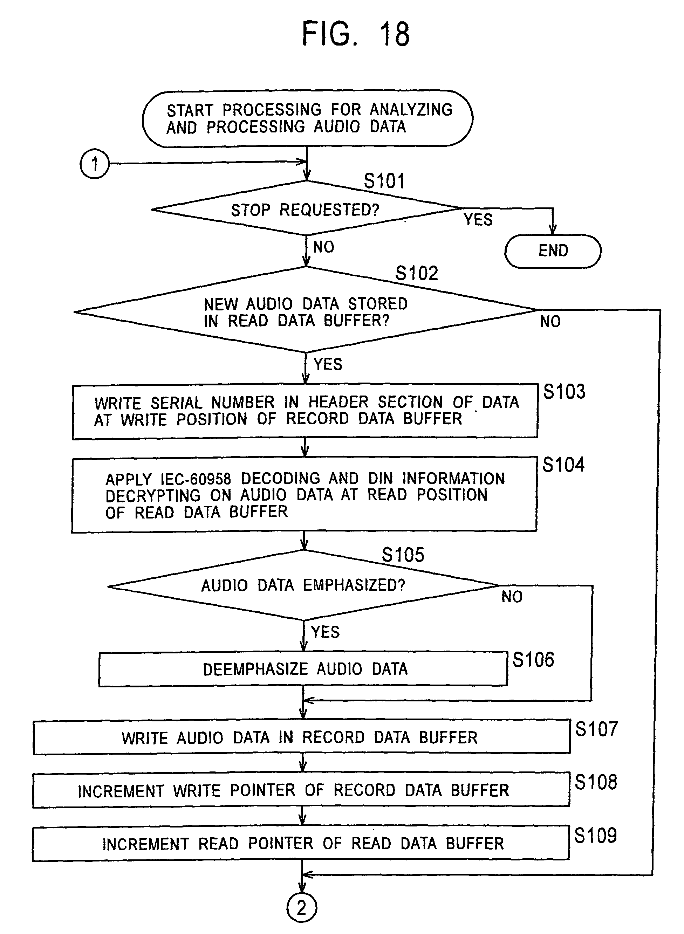

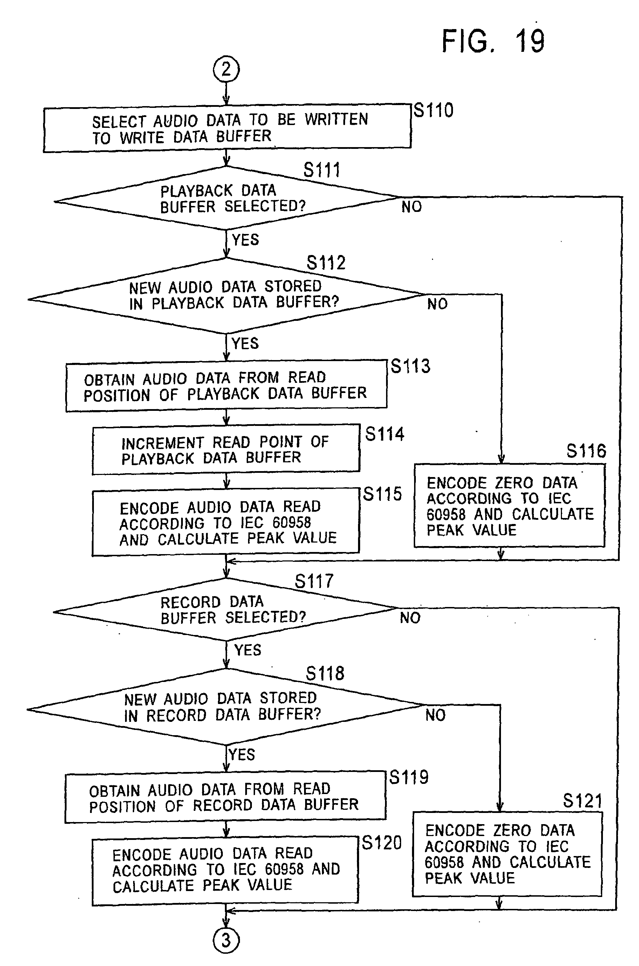

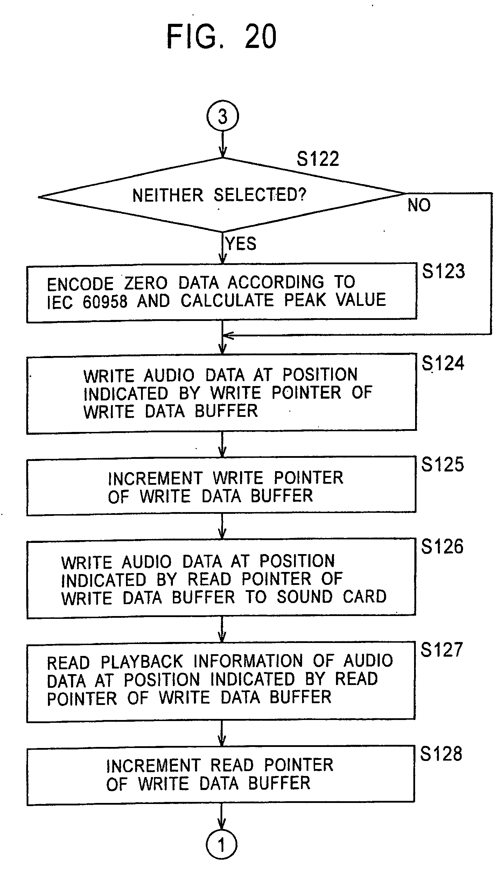

The audio data stored in the playback data buffer 109 is sent to the sound card 18 by processing that will be described later with reference to flowcharts shown in Figs. 18 to 20. When the audio data has been sent to the sound card 18, a vacancy arises in the playback data buffer 109, so that audio data can be transferred thereto from the playback application program 86.

When a vacancy exists in the playback data buffer 109, the playback application program 86 transfers audio data of a predetermined size at once to the playback data buffer 109. Then, each time a vacancy arises in the playback data buffer 109, the playback application program 86 transfers audio data of the predetermined size at once to the playback data buffer 109.

Thus, similarly to the case of recording, even when the playback application program 86 cannot transfer audio data regularly due to certain reasons, when audio data is stored in the playback data buffer 109, dropout of sound played back is prevented.

Furthermore, by clearing audio data stored in the playback data buffer 109, when the playback application program 86 stops playback or changes musical piece that is played back, the audio data stored in the playback data buffer 109 is prevented from being output continuously from the sound card 18.

The switch 105 selects one of audio data supplied from the audio-data analyzing and filtering program 103, audio data supplied from the playback data buffer 109, and audio data of zero data supplied from a zero-data generating program 110 for generating zero data corresponding to silence, and supplies the audio data selected to the IEC-60958 encoding program 106.

For example, when recording is executed while checking sound recorded by the recording application program 85 (that is, while outputting audio data from the sound card 18), the record data buffer 104 is selected as a source of audio data to be output. That is, the switch 105 selects audio data supplied from the audio-data analyzing and filtering program 103, and supplies the audio data to the IEC-60958 encoding program 106.

Accordingly, the user is allowed to execute recording while checking audio data that has been processed by processing that will be described with reference to flowcharts shown in Figs. 18 to 20.

For example, when the playback application program 86 executes processing for playback, the playback data buffer 109 is selected as a source of audio data to be output. That is, the switch 105 selects audio data supplied from the playback data buffer 109, and supplies the audio data to the IEC-60958 encoding program 106.

Furthermore, for example, when a process for playback or a process for recording does not exist, that is, when the playback application program 86 or the recording application program 85 is not activated, neither the record data buffer 104 or the playback data buffer 109 is selected, and audio data corresponding to silence is output. That is, the switch 105 selects audio data of zero data supplied from the zero-data generating program 110 for generating zero data corresponding to silence, and supplies the audio data to the IEC-60958 encoding program 106.

When the playback application program 86 has suspended playback of a musical piece, the operation of the playback data buffer 109 must be stopped. Also in this case, neither the record data buffer 104 or the playback data buffer 109 is selected, so that audio data corresponding to silence is output.

The IEC-60958 encoding program 106 encodes audio data supplied via the switch 105, according to the IEC 60958 Standard. That is, the IEC-60958 encoding program 106 changes the format of the audio data according to the IEC 60958 Standard. The IEC-60958 encoding program 106 supplies the audio data that has been encoded according to the IEC 60958 Standard to a write data buffer 111.

The write data buffer 111 temporarily stores audio data supplied from the record data buffer 104, by units of subframe. The write data buffer 111 can be implemented, for example, in the form of what is called a ring buffer.

While the audio-data processing program 83 is in operation, audio data stored in the write data buffer 111 is being regularly output at constant timing to the sound card 18. Thus, it can be said that the write data buffer 111 is operating constantly.

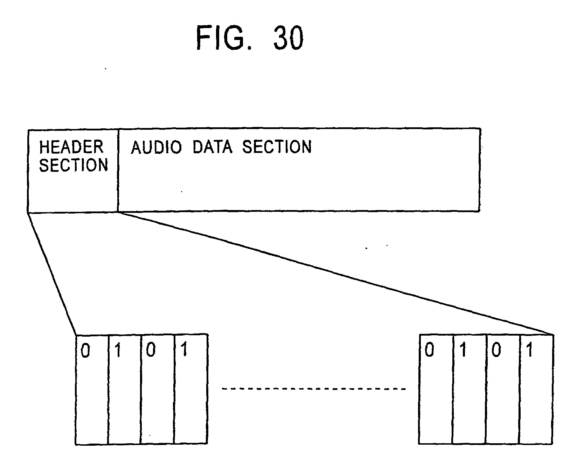

The read data buffer 102 and the write data buffer 111 store audio data by units of.subframe according to IEC 60958. On the other hand, the record data buffer 104 and the playback data buffer 109 store audio data by units of data composed of a larger number of sample data than a subframe (which will be described later with reference to Fig. 30).

Although the description has been made in the context of audio data streams conforming to IEC 60958, other types of streams may be used, for example, MPEG (Moving Pictures Experts Group) transport streams or packetized elementary streams, and the present invention is not limited by types of streams.

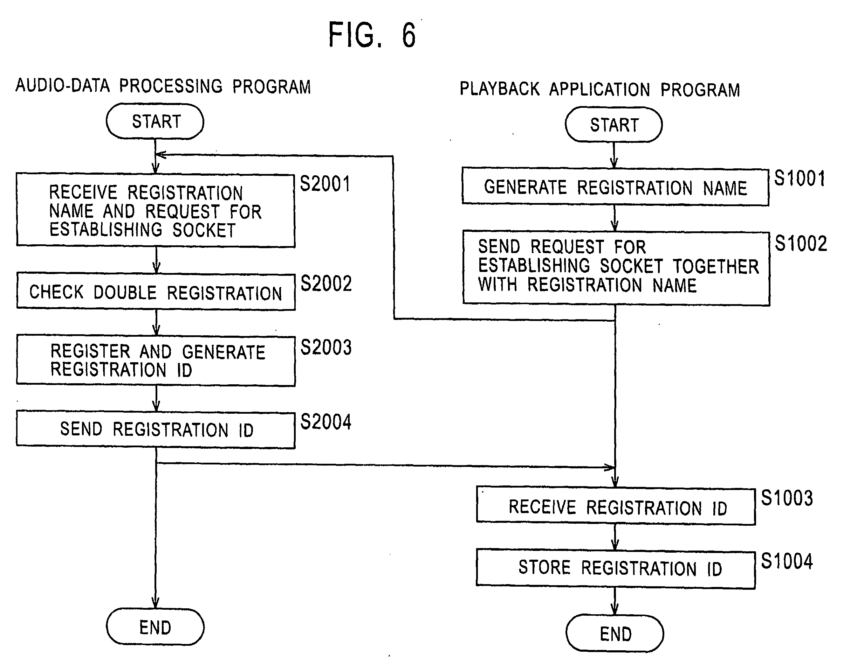

Next, an overview of processing executed by the audio-data processing program 83 to the playback application program 86 will be described with reference to Figs. 6 to 11.

Fig. 6 is a flowchart showing processing for registration executed by the playback application program 86.

In step S1001, the playback application program 86 generates a registration name. In step S1002, the playback application program 86 sends a request for establishing a socket, together with the registration name, to the audio-data processing program 83 by interprocess communication.

In step S2001, the audio-data processing program 83 receives the registration name and the request for establishing a socket, sent by the playback application program 86. In step S2002, the audio-data processing program 83 checks double registration of playback application programs, that is, whether another application program has not been registered as a party for which processing for playback is to be executed. If another application program has been registered as a playback application program, subsequent processing is not executed.

Thus, multiple registration of a plurality of playback application programs is prevented. Accordingly, establishment of two or more sockets for receiving audio data from application programs is prevented, so that sound skipping is prevented.

If it is determined that the registration name received by the processing in step S2001 has not been registered in association with another application program, the processing proceeds to step S2003. In step S2003, the audio-data processing program 83 registers the registration name received by the processing in step S2001, and generates a registration ID associated with the registration name. The audio-data processing program 83 registers the registration ID in association with the registration name. That is, the audio-data processing program 83 stores the registration ID and the registration name in association with each other.

The audio-data processing program 83 requests the kernel 82 to establish a socket with the playback application program 86.

In step S2004, the audio-data processing program 83 sends the registration ID to the playback application program 86.

In step S1003, the playback application program 86 receives the registration ID sent by the audio-data processing program 83.

In step S1004, the playback application program 86 stores the registration ID received, and then the processing ends.

Processing for registration executed by the recording application program 85 is the same as the processing described with reference to the flowchart shown in Fig. 6, so that description thereof will be omitted.

Multiple registration of a plurality of recording application programs is prevented. Thus, establishment of two or more sockets for sending audio data to application programs is prevented, so that sound dropout is prevented.

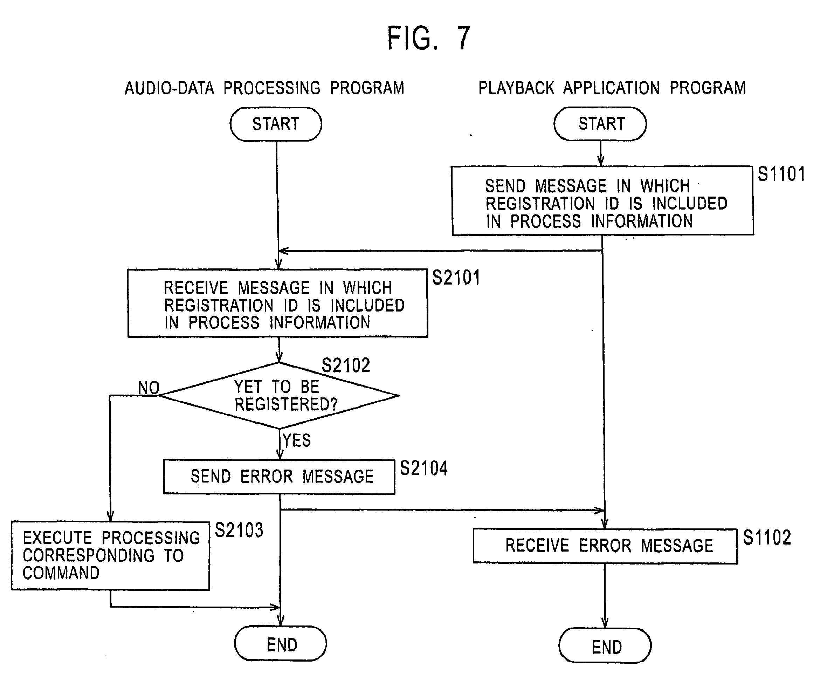

Fig. 7 is a flowchart showing processing for confirmation of a registration ID included in a message for requesting processing to the audio-data processing program 83.

In step S1101, the playback application program 86 sends a message in which a registration ID is included in process information. The structure of the message will be described later.

In step S2101, the audio-data processing program 83 receives the message in which a registration ID is included in process information, sent by the playback application program 86. The audio-data processing program 83 extracts the registration ID from the process information of the message.

In step S2102, the audio-data processing program 83 determines whether the registration ID extracted is yet to be registered, based on registration IDs stored. If it is determined that the registration ID extracted has been registered, the processing proceeds to step S2103, in which the audio-data processing program 83 executes processing corresponding to a command included in the message.

On the other hand, if it is determined in step S2102 that the registration ID extracted has not been registered, the processing proceeds to step S2104, in which the audio-data processing program 83 sends an error message to the playback application program 86. If it is determined that the registration ID extracted has not been registered, the audio-data processing program 83 does not execute processing corresponding to the command included in the message.

In step S1102, the playback application program 86 receives the error message sent by the audio-data processing program 83, and then the processing ends.

Similarly for a message sent by the recording application program 85, the processing for confirming a registration ID included in the message, described with reference to Fig. 7, is executed, so that description thereof will be omitted.

Accordingly, when a plurality of application programs uses the audio-data processing program 83 in processing for playback or processing for recording, the plurality of application programs is prevented from simultaneously requesting processing for playback or processing for recording to the audio-data processing program 83.

For example, when a first process for executing playback is executing processing for playback, if a second process for executing playback is allowed to send audio data for playback to the audio-data processing program 83, the audio data supplied from the second process is mixed into audio data supplied from the first process. Thus, the audio data supplied from the first process cannot be played back properly.

Similarly, when a first process for executing recording is executing processing for recording, if the audio-data processing program 83 is allowed to send audio data to a second process for executing recording, audio data is intercepted, so that the first process results in recording audio data with partial loss.

In order to prevent such competition for the audio-data processing program 83 that is commonly used, the audio-data processing program 83 first requests to each application program that uses the audio-data processing program 83 to send information identifying itself.

When processing for playback or processing for recording is actually executed, the audio-data processing program 83 executes exclusive control. That is, the audio-data processing program 83 remembers a user of the record data buffer 104 and the user of a playback data buffer 109, and excludes use by another user when the record data buffer 104 or the playback data buffer 109 is being used.

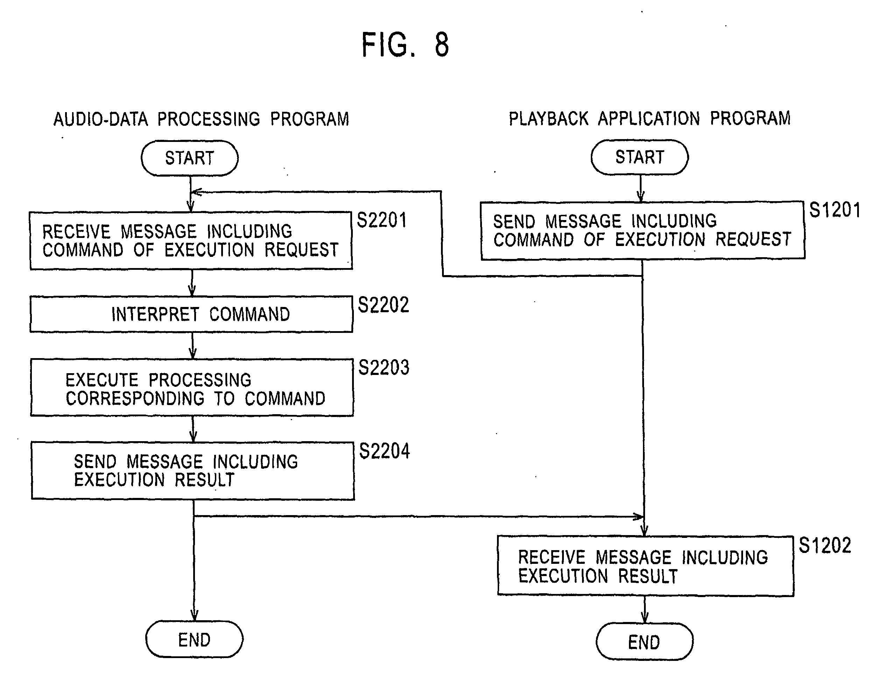

Fig. 8 is a flowchart showing processing executed by the audio-data processing program 83 for executing processing corresponding to a command included in a message sent by the playback application program 86.

In step S1201, the playback application program 86 sends a message including a command of execution request to the audio-data processing program 83 via a socket for sending messages.

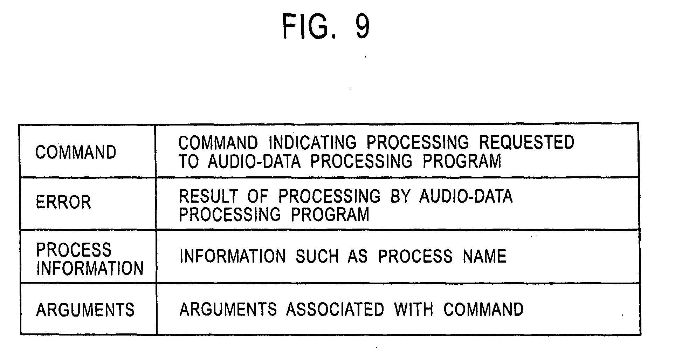

Fig. 9 is a diagram showing the structure of the message. The message includes command, error, process information, and arguments.

The command included in the message indicates processing requested to the audio-data processing program 83 by an application program that sends the message. The error indicates a result of processing requested by the command. The error does not necessarily indicate an abnormal completion, and data representing normal completion of processing is set when processing completes normally.

The process information includes a name, a registration ID, or the like of an application program, i.e., a process. The arguments include arguments associated with the command, e.g., parameters needed for processing corresponding to the command. When the audio-data processing program 83 notifies an application program of a result of processing requested by the command, the result of executing the command is set as an argument as required.

In step S2201, the audio-data processing program 83 receives a message sent from the playback application program 86 via the socket. In step S2202, the audio-data processing program 83 extracts the command from the message received and interprets the command. For example, the audio-data processing program 83 prestores a table associating bit sequences of commands with service names, and obtains a service name corresponding to the command based on the table.

In step S2203, the audio-data processing program 83 executes processing corresponding to the command. For example, the audio-data processing program 83, based on the service name corresponding to the command, activates processing corresponding to the service name.

In step S2204, the audio-data processing program 83 sends a message including a result of execution of the processing in step S2203 to the playback application program 86 via the socket for sending messages. The result of execution is stored in the error of the message.

In step S1202, the playback application program 86 receives the message including the result of execution, sent by the audio-data processing program 83, and then the processing ends.

Processing executed by the audio-data processing program 83 for executing processing corresponding to a command included in a message sent by the recording application program 85 is the same as the processing described with reference to the flowchart shown in Fig. 8, so that description thereof will be omitted.

As described above, the audio-data processing program 83 executes particular processing based on a command included in a message sent by another application program. The application program that has sent the message including the command to the audio-data processing program 83 to request the particular processing is allowed to know a result of processing by the audio-data processing program 83, based on a message including the result of execution.

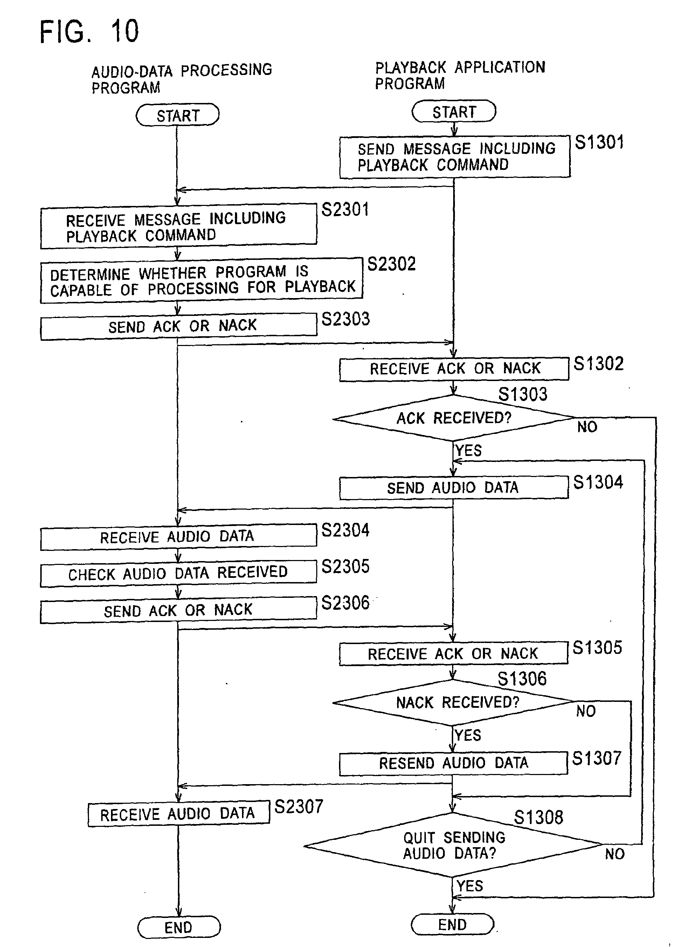

An overview of processing for sending audio data from the playback application program 86 to the audio-data processing program 83 will be described with reference to a flowchart shown in Fig. 10.

In step S1301, the playback application program 86 sends a message including a playback command to the audio-data processing program 83 via a socket for sending messages. The message includes the playback command, and also includes, as process information, a registration ID of the playback application program 86.

In step S2301, the audio-data processing program 83 receives the message including the playback command. In step S2302, the audio-data processing program 83 determines, based on the registration ID included in the message as process information, whether the program that has sent the message, i.e., the playback application program 86, is a program capable of executing processing for playback. In step S2303, if it is determined that the playback application program 86 is a program capable of executing processing for playback, the audio-data processing program 83 sends a message in which ACK is stored in error to the playback application program 86 via the socket for sending messages. On the other hand, if it is determined that the playback application program 86 is not a program capable of executing processing for playback, the audio-data processing program 83 sends a message in which NACK is stored in error to the playback application program 86 via the socket for sending messages.

In step S1302, the playback application program 86 receives the message including ACK or NACK, sent by the audio-data processing program 83. The playback application program 86 extracts ACK or NACK stored in the error of the message.

In step S1303, the playback application program 86 determines whether ACK has been received. If it is determined that ACK has been received, the processing proceeds to step S1304, in which the playback application program 86 sends audio data to be played back to the audio-data processing program 83 via a socket for sending audio data.

In step S2304, the audio-data processing program 83 receives the audio data sent via the socket for sending audio data.

In step S2305, the audio-data processing program 83 checks the audio data received, for example, whether a loss has occurred in the audio data, based on the size (e.g., the number of bytes) of the audio data received.

In step S2306, if a loss is detected in the audio data, the audio-data processing program 83 sends a message in which NACK is stored in error to the playback application program 86 via a socket. On the other hand, if no loss is detected in the audio data, the audio-data processing program 83 sends a message in which ACK is stored in error to the playback application program 86 via a socket.

In step S1305, the playback application program 86 receives the message in which ACK or NACK is stored in the error, sent by the audio-data processing program 83. The playback application program 86 extracts ACK or NACK from the error of the message.

In step S1306, the playback application program 86 determines whether a message including NACK has been received. If it is determined that a message including NACK has been received, the processing proceeds to step S1307, in which the playback application program 86 resends the audio data via the socket for sending audio data to the audio-data processing program 83. The audio data resent by the processing in step S1307 is the same as the audio data sent by the processing in step S1304.

In step S2307, the audio-data processing program 83 receives the audio data resent by the playback application program 86. If audio data without any loss is received by the processing in step S2304, the processing in step S2307 is not executed.

The processing for resending audio data is limited to only once for each piece of audio data. This is because if a piece of audio data is resent several times, the audio data will not be in time for playback.

If it is determined in step S1306 that a message including ACK has been received, it is understood that the audio-data processing program 83 has received audio data without any loss by the processing in step S2304, so that the audio data need not be resent. Thus, the processing in step S1307 is skipped, and the processing proceeds to step S1308.

In step S1308, the playback application program 86 determines whether or not to quit sending audio data. If it is determined that sending of audio data is to be continued, the processing returns to step S1304, and the processing for sending audio data is repeated.

If it is determined in step S1308 that sending of audio data is to be stopped, the processing ends.

If it is determined in step S1303 that NACK has been received, it is understood that the playback application program 86 is not a program capable of executing processing for playback, that is, the playback application program 86 is not capable of sending audio data to the audio-data processing program 83, so that the processing ends.

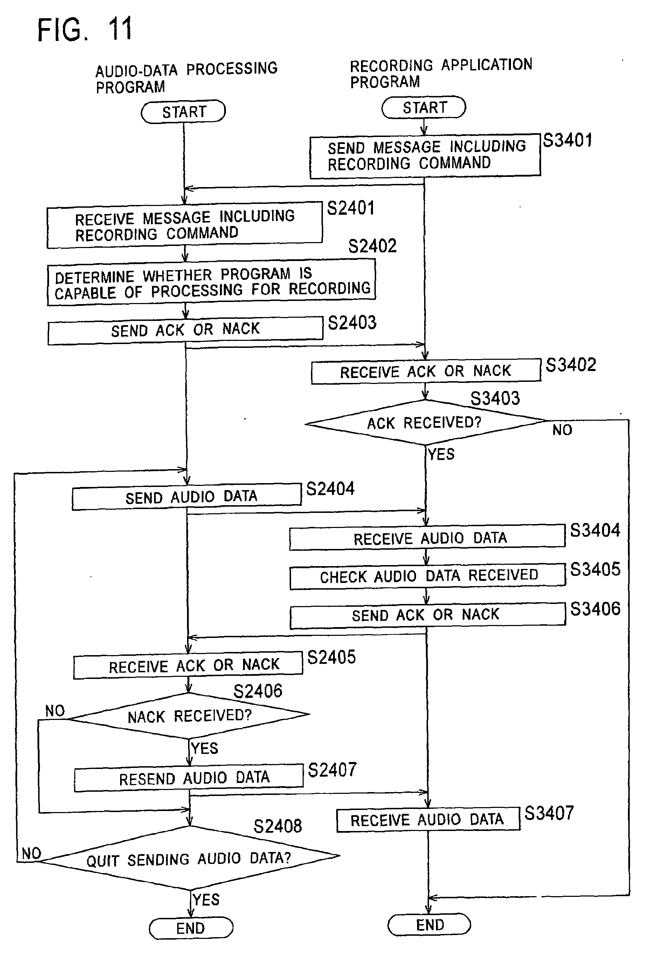

An overview of processing for sending audio data from the audio-data processing program 83 to the recording application program 85 will be described with reference to a flowchart shown in Fig. 11.

In step S3401, the recording application program 85 sends a message including a recording command to the audio-data processing program 83 via a socket for sending messages. The message includes the recording command, and also includes, as process information, a registration ID of the recording application program 85.

In step S2401, the audio-data processing program 83 receives the message including the recording command. In step S2402, the audio-data processing program 83 determines, based on the registration ID included in the message as process information, whether the recording application program 85 is a program capable of executing processing for recording. In step S2403, if it is determined that the recording application program 85 is a program capable of executing processing for recording, the audio-data processing program 83 sends a message in which ACK is stored in error to the recording application program 85 via a socket for sending messages. On the other hand, if it is determined that the recording application program 85 is not a program capable of executing processing for recording, the audio-data processing program 83 sends a message in which NACK is stored in error to the recording application program 85 via a socket for sending messages. If it is determined that the recording application program 85 is not a program capable of executing processing for recording, subsequent processing is not executed, and audio data is not sent.

In step S3402, the recording application program 85 receives the message including ACK or NACK, sent by the audio-data processing program 83. The recording application program 85 extracts ACK or NACK stored in the error of the message.

If it is determined in step S2402 that the recording application program 85 is a program capable of executing processing for recording, the processing proceeds to step S2404, in which the audio-data processing program 83 sends audio data to be recorded to the recording application program 85 via a socket for sending audio data.

In step S3404, the recording application program 85 receives the audio data sent via the socket for sending audio data.

In step S3405, the recording application program 85 checks the audio data received for example, whether a loss has occurred in the audio data, based on the size (e.g., the number of bytes) of the audio data received.

In step S3406, if a loss is detected in the audio data, the recording application program 85 sends a message in which NACK is stored in error to the audio-data processing program 83 via a socket. On the other hand, if no loss is detected in the audio data, the recording application program 85 sends a message in which ACK is stored in error to the audio-data processing program 83 via a socket.

In step S2405, the audio-data processing program 83 receives the message in which ACK or NACK is stored in the error, sent by the recording application program 85. The audio-data processing program 83 extracts ACK or NACK from the error of the message.

In step S2406, the audio-data processing program 83 determines whether a message including NACK has been received. If it is determined that a message including NACK has been received, the processing proceeds to step S2407, in which the audio-data processing program 83 resends audio data via the socket for sending audio data to the recording application program 85. The audio data resent by the processing in step S2407 is the same as the audio data sent by the processing in step S2404.

In step S3407, the recording application program 85 receives the audio data resent by the audio-data processing program 83. If audio data without any loss is received by the processing in step S3404, the processing in step S3407 is not executed.

The processing for resending audio data is limited to only once for each piece of audio data. This is because if a piece of audio data is resent several times, the audio data will not be in time for recording.

If it is determined in step S2406 that a message including ACK has been received, it is understood that the recording application program 85 has received audio data without any loss by the processing in step S3404, so that the audio data need not be resent. Thus, the processing in step S2407 is skipped, and the processing proceeds to step S2408.

In step S2408, the audio-data processing program 83 determines whether or not to quit sending audio data. If it is determined that sending of audio data is to be continued, the processing returns to step S2404, and the processing for sending audio data is repeated.

If it is determined in step S2408 that sending of audio data is to be stopped, the processing ends.

If it is determined in step S3403 that NACK has been received, it is understood that the recording application program 85 is not a program capable of executing processing for playback, that is, the recording application program 85 is not capable of sending audio data to the audio-data processing program 83, so that the processing ends.

Next, processing executed by the audio-data processing program 83 to the playback application program 86 will be described in detail.

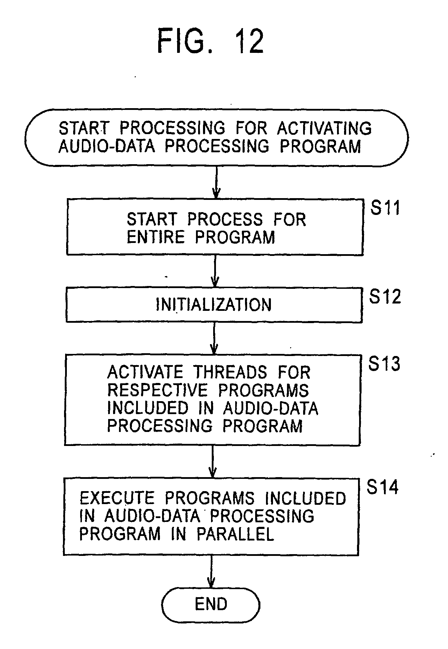

Fig. 12 is a flowchart showing processing for activating the audio-data processing program 83.

In step S11, the audio-data processing program 83 starts a process for itself, i.e., for the entire audio-data processing program 83.

In step S12, the audio-data processing program 83 executes processing for initialization.

In step S13, the audio-data processing program 83 requests the kernel 82 to activate threads for respective programs included in the audio-data processing program 83, i.e., the reading control program 101 to the zero-data generating program 110.

Furthermore, the audio-data processing program 83 allocates storage areas for the read data buffer 102, the record data buffer 104, the playback data buffer 109, and the write data buffer 111.

In a multithread system, a plurality of threads is executed in a single process, so that a multithread system allows multitask processing within a single process. Threads in the same process share resources such as memory resources and I/O (input/output) resources, so that data can be readily transferred among the reading control program 101 to the zero-data generating program 110.

In step S14, the kernel 82 executes in parallel (by time division) the respective programs included in the audio-data processing program 83, i.e., the reading control program 101 to the zero-data generating program 110, and then the processing ends.

The reading control program 101 to the zero-data generating program 110 are executed in parallel until a stop is requested.

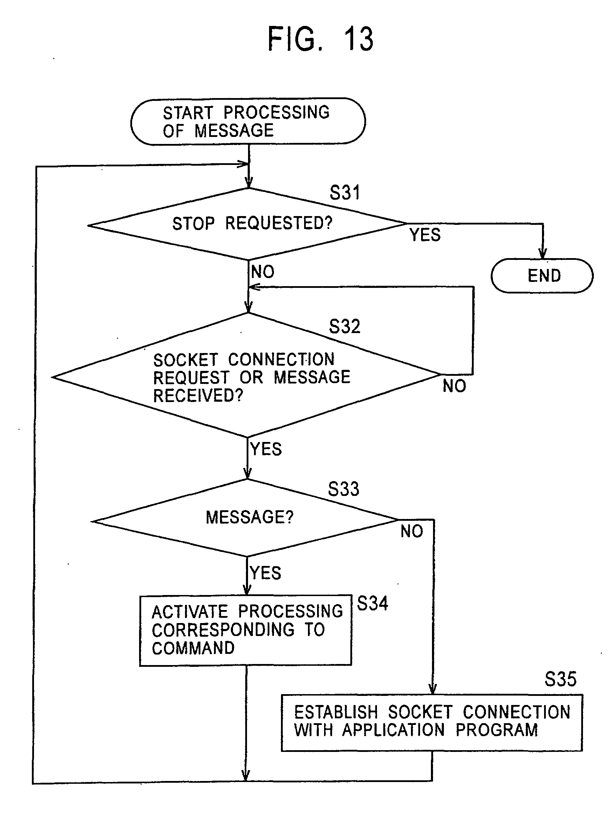

Fig. 13 is a flowchart showing processing of a message by the sending control program 107.

In step S31, the sending control program 107 determines whether the kernel 82 has requested a stop. If it is determined that a stop has not been requested, the processing proceeds to step S32, in which the sending control program 107 determines whether or not a socket connection request or a message has been received. If it is determined that a socket connection request or a message has not been received, the processing returns to step S32, and the sending control program 107 repeats processing for determination until a socket connection request or a message is received.

The processing in step S32 is achieved, for example, by execution of a function referred to as a "select" system call.

If it is determined in step S32 that a socket connection request or a message has been received, the processing proceeds to step S33, in which the sending control program 107 determines whether a message has been received. If it is determined that a message has been received, the processing proceeds to step S34, in which the sending control program 107 extracts a command from the message, activates processing corresponding to the command, and executes the processing corresponding to the command. The processing then returns to step S31, and the processing is repeated.

On the other hand, if it is determined in step S33 that a socket connection request has been received, the processing proceeds to step S35, in which the sending control program 107 establishes a socket connection with the recording application program 85 or the playback application program 86. The processing then returns to step S31, and the processing is repeated.

By the establishment of the socket connection, for example, a port number corresponding to the recording application program 85 or the playback application program 86 and the audio-data processing program 83 is stored by the kernel 82 as a socket object. The socket service program 84-1 or the socket service program 84-2 identifies a party that receives audio data or a party to which audio data is to be transferred based on the socket object generated by the establishment of the socket connection.

For example, a party that has requested the establishment of the socket connection, i.e., the recording application program 85 or the playback application program 86, obtains a handle for identifying a socket to be used from the audio-data processing program 83 when the socket connection has been established.

If it is determined in step S31 that a stop has been requested, the processing ends.

Processing of a message by the receiving control program 108 is the same as the processing described with reference to the flowchart shown in Fig. 13, so that description thereof will be omitted.

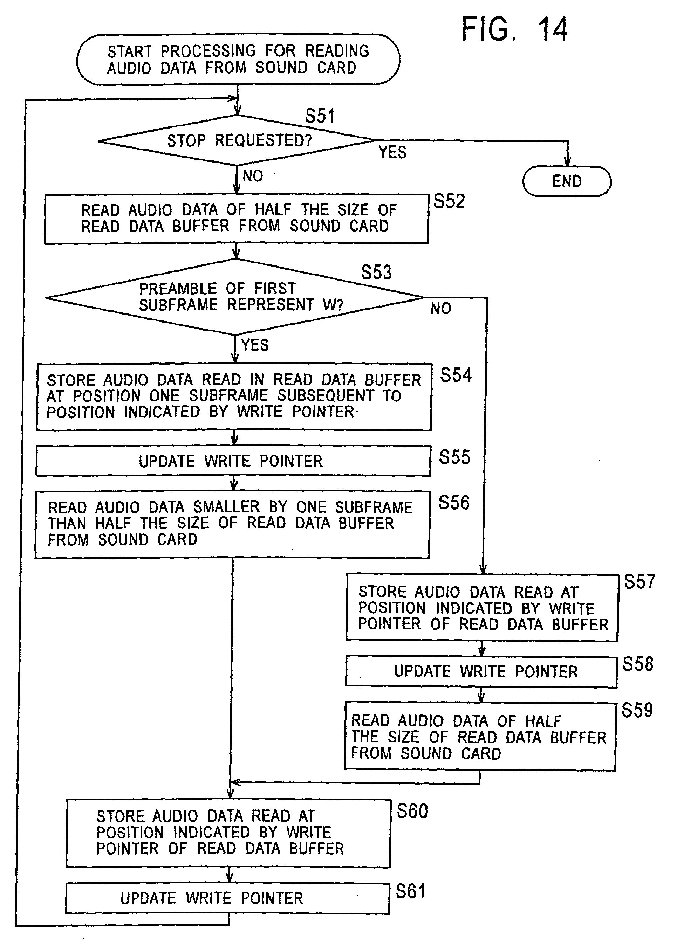

Next, processing executed by the reading control program 101 for reading audio data from the sound card 18 will be described with reference to a flowchart shown in Fig. 14.

In step S51, the reading control program 101 determines whether a stop has been requested by the recording application program 85. If it is determined that a stop has not been requested, the processing proceeds to step S52, in which the reading control program 101 reads audio data of half the size of the read data buffer 102 from the sound card 18. More specifically, the reading control program 101 requests, by a system call, the kernel 82 to read audio data from the sound card 18, and the kernel 82 causes the device driver 81 to read audio data from the sound card 18. The kernel 82 supplies the audio data read to the reading control program 101.

In processing in step S52, and steps S56 and S59 that will be described later, audio data that is read consists of a group of subframes conforming to the IEC 60958 Standard.

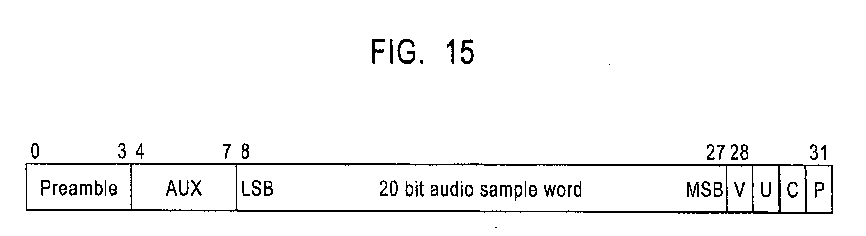

Fig. 15 is a diagram showing the format of audio data that is read from the sound card 18. Audio data conforming to the IEC 60958 Standard is input from the sound card 18 as a stream, and the audio data input is supplied to the audio-data processing program 83. Also, audio data conforming to the IEC 60958 Standard, supplied from the audio-data processing program 83, is output from the sound card 18.

Fig. 15 is a diagram showing the structure of audio data corresponding to a subframe, which is the minimum unit according to the IEC 60958 Standard. A subframe consists of 32 bits of data including one sample (data representing the amplitude of sound). A frame consists of two subframes, and includes one sample for an L (left) channel and one sample for an R (right) channel. A frame is sometimes also referred to as samples.

That is, a subframe includes a sample of either the L channel or the R channel.

A block consists of 192 contiguous frames.

Four bits from the most significant bit of the subframe, corresponding to the left side in the figure, are a preamble. The preamble represents one of B, M, and W.

A subframe at the beginning of a block includes a sample of the L channel, and the preamble of the subframe at the beginning of the block represents B.

The preamble of a subframe including a sample of the R channel represents W.

Except for the subframe at the beginning of the block, the preamble of a subframe including a sample of the L channel represents M.

The four bits following the preamble (fifth to eights bits as counted from the most significant bit) are auxiliary bits (auxiliary sample bits). The twenty bits following the auxiliary bits (ninth to 28th bits as counted from the most significant bit) are an audio sample word, which is a sample of sound (sampling data).

In the four auxiliary bits, high-order bits of audio data are stored when audio data is extended to 24 bits.

The one bit at the 29th bit as counted from the most significant bit of the subframe is a validity flag (validity bit) indicating whether the subframe is valid (hereinafter also referred to as a V bit). The one bit following the V bit represents user data (user data bit) (hereinafter also referred to as a U bit). The one bit at the 31st bit as counted from the most significant bit of the subframe is channel status (channel status bit) representing channel status (hereinafter also referred to as a C bit). The bit following the C bit is a parity bit (hereinafter also referred to as a P bit).

The C bits of subframes belonging to one block collectively represent properties of audio data. That is, the channel status representing the properties of audio data is represented by the 192 bits (24 bytes) corresponding to the C bits of the subframes including samples of the L channel.

That is, the channel status is composed of a sequential collection of the C bits of subframes with preambles representing B and the C bits of subframes with preambles representing M.

The channel status includes a bit indicating distinction as to whether the audio data is for business use or commercial use, a bit indicating distinction between audio data and non-audio data, three-bit data representing the presence or absence of emphasis, an 8-bit category code according to the IEC 60958 Standard, an L bit, etc.

The preamble W includes the same content as the preamble B or the preamble M.

If the category represented by the category code is an optical disc, for example, a CD or an MD (mini-disc), the U bits included in respective subframes have a format referred to as subcodes, and include information that is useful for changing the number of content (musical piece) recorded on the optical disc based on the subcodes.

The subcodes are defined as follows.

The U bits are used with the left and right channels multiplexed, and form a subcode block consisting of 1,176 bits on average. One frame of a CD consists of one subcoding symbol including twelve audio samples. A subcode block is formed by 98 subcoding symbols, so that the number of U bits needed is 12*98 = 1,176 bits.

A subcode sync is represented by at least 16 successive occurrences of '0' bit. A start bit is represented by '1'. Following the start bit, seven bits Q to W are transmitted. The interval of start bits may vary from 8 bits at minimum to 16 bits at maximum.

A subcode frame consists of 98 frames. A subcode frame includes 98 bits for each of subcode P, subcode Q, subcode R, subcode S, subcode T, subcode U, subcode V, and subcode W.

Referring back to Fig. 14, in step S53, the reading control program 101 determines whether the preamble of the first subframe of the audio data read from the sound card 18 represents W. If it is determined in step S53 that the preamble of the first subframe represents W, it is understood that the first subframe stores a sample of the R channel. Then, the processing proceeds to step S54, in which the reading control program 101 stores the audio data in the read data buffer 102 at a position that is one subframe subsequent to a position indicated by the write pointer of the read data buffer 102.

In step S55, the reading control program 101 updates the write pointer in accordance with the processing in step S54 for storing audio data in the read data buffer 102.

In step S56, the reading control program 101 reads from the sound card 18 audio data of a size smaller by one subframe than half the size of the read data buffer 102. The procedure then proceeds to step S60.

On the other hand, if it is determined in step S53 that the preamble of the first subframe does not represent W, it is understood that the first subframe includes a sample of the L channel. Thus, the processing proceeds to step S57, in which the reading control program 101 stores the audio data read at a position indicated by the write pointer of the read data buffer 102.

In step S58, the reading control program 101 updates the write pointer in accordance with the processing in step S57 for storing audio data in the read data buffer 102.

In step S59, the reading control program 101 reads from the sound card 18 audio data of half the size of the read data buffer 102. The procedure then proceeds to step S60.

In step S60, the reading control program 101 stores the audio data read by the processing in step S56 or the processing in step S59 at a position indicated by the write pointer of the read data buffer 102.

In step S61, the reading control program 101 updates the write pointer in accordance with the processing in step S60 for storing audio data in the read data buffer 102. The processing then returns to step S51, and the processing for reading audio data is repeated.

If it is determined in step S51 that a stop has been requested by the recording application program 85, the processing ends.

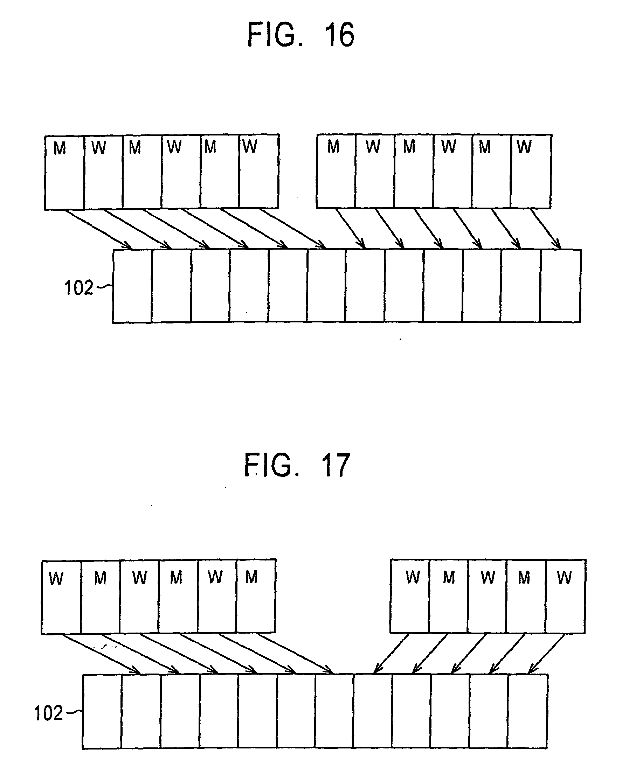

As described above, if the subframe at the beginning of the audio data that is half the size of the read data buffer 102, read from the sound card 18, includes a sample of the L channel, the audio data is written at a position indicated by the write pointer of the read data buffer 102, as shown in Fig. 16. Then, audio data of half the size of the read data buffer 102 is further read from the sound card 18, and the audio data is written to the read data buffer 102 subsequently to the audio data previously written.

On the other hand, if the subframe at the beginning of the audio data that is half the size of the read data buffer 102, read from the sound card 18, includes a sample of the R channel, the audio data is written at a position that is one frame subsequent to a position indicated by the write pointer of the read data buffer 102. Then, audio data of a size that is smaller by one subframe than half the size of the read data buffer 102 is further read from the sound card 18, and the audio data is written to the read data buffer 102 subsequently to the audio data previously written.

Accordingly, a subframe of the L channel is stored at a predetermined position of the read data buffer 102, so that reversal of sounds of the L channel and the R channel is prevented.

Next, processing executed by the audio-data analyzing and filtering program 103 and the IEC-60958 encoding program 106 for analyzing and processing audio data will be described with reference to flowcharts shown in Figs. 18 to 20.

In step S101, the audio-data analyzing and filtering program 103 determines whether a stop has been requested by the kernel 82. If it is determined that a stop has not been requested, the processing proceeds to step S102, in which the audio-data analyzing and filtering program 103 determines, based on the value of the read pointer, whether new audio data has been stored in the read data buffer 102.

If it is determined in step S102 that new audio data has been stored in the read data buffer 102, the processing proceeds to step S103. In step S103, the audio-data analyzing and filtering program 103 writes a serial number to the header of audio data indicated by the write pointer among audio data stored in the record data buffer 104.

Figs. 21 and 22 are diagrams showing the structure of audio data stored in the record data buffer 104 or the playback data buffer 109.

As shown in Fig. 21, audio data stored in the read data buffer 104 and audio data stored in the playback data buffer 109 includes a header section and an audio data section. The header section includes information obtained by analyzing audio data obtained from the sound card 18, i.e., information used for controlling processing of audio data. The audio data section includes samples of audio data obtained from the sound card 18, i.e., data of sound itself. A single audio data section includes a plurality of samples of audio data. That is, a single audio data section corresponds to a plurality of subframes.

The recording application program 85 is allowed to notify the audio-data processing program 83 of a position of audio data where recording is to be started or a position of audio data where recording is to be stopped among the audio data stored in the record data buffer 104, by issuing an instruction to start or stop recording to the audio-data processing program 83.

Fig. 22 is a diagram showing a detailed structure of a header section of audio data stored in the record data buffer 104 and audio data stored in the playback data buffer 109.

The header section includes a serial number, C-bit information, SCMS (Serial Copy Management System) information, a category of digital data, an external-apparatus-playback flag, a track-change flag, track-change-point position information, an effective audio-data length, playback information, and an audio signal level.

The serial number is a number sequentially assigned to audio data. The serial number is used by the recording application program 85 to find an elapsed recording time. A method of finding an elapsed recording time will be described later.

Furthermore, for example, when the recording application program 85 issues an instruction to start or stop recording to the audio-data processing program 83, the recording application program 85 may notify the audio-data processing program 83, by a serial number, of audio data where recording is to be started (e.g., first audio data) and audio data where recording is to be stopped (e.g., last audio data) among audio data stored in the record data buffer 104.

In the C-bit information, the same information as C bits included in audio data conforming to the IEC 60958 Standard, read from the sound card 18, is set.

The SCMS information is information indicating whether recording of the audio data conforming to the IEC 60958 Standard, read from the sound card 18, is permitted, included in the information obtained by analyzing the C bits included in the audio data.

The category of digital data includes category information obtained by analyzing the C bits included in the audio data conforming to the IEC 60958 Standard, read from the sound card 18, and also includes information for determining whether the audio data read from the sound card 18 is audio data recorded on an audio CD-R (CD-recordable) or audio data recorded on an ordinary CD.

The category of an audio CD-R is CD; however, the category is special in that copyright information included in the C bits of audio data recorded on an audio CD-R oscillates at 4 to 10 Hz. Since audio data in which copyright information oscillates at 4 to 10 Hz must not be recorded, information indicated that effect is stored as a category in the header section.

The external-apparatus-playback flag is a flag indicating whether an external playback apparatus 51 that supplies audio data read via the sound card 18 is in a playback operation.

Generally, in many recording apparatuses, detection of an interval between musical pieces is assumed when the level of sound of audio data input remains not larger than a predetermined threshold value for a predetermined period, and the number of musical piece is changed.

However, in some CDs on the market, long silence is intentionally included by the artist. When audio data read from such a CD is recorded, an interval between musical pieces could be inserted within a single musical piece.

In order to prevent this, an interval between musical pieces is not inserted when the external playback apparatus 51 is in a playback operation.

When the category of audio data is CD, whether the external playback apparatus 51 is in a playback operation is determined based on whether aframe included in the subcode Q monotonically increases, in the narrower sense, twenty times successively. Thus, whether the external playback apparatus 51 is in a playback operation can be determined only when the category of audio data is CD.

The track-change flag indicates detection of an interval between musical pieces as a result of analyzing U bits of audio data read via the sound card 18.

The track-change-point position information indicates the number of byte where an interval between musical pieces is detected as counted from the beginning of the audio data section when the track-change flag is true (when an interval between musical pieces is detected).

The effective audio-data length specifies how many bytes of audio data from the beginning must be actually played back among audio data stored in the playback data buffer 109 when audio data has been stored in the playback data buffer 109 by the playback application program 86. The effective audio-data length is used effectively when the size of audio data corresponding to a single musical piece is smaller than the size of the audio data section.

The playback information is a memo area used for finding an elapsed playback time or an elapsed recording time. A method of finding an elapsed playback time or an elapsed recording time based on the playback information will be described later.

The audio signal level represents the signal level of audio data stored in the record data buffer 104 or the playback data buffer 109.

Referring back to Fig. 18, in step S103, a serial number is written in the header section of audio data indicated by the write pointer of the record data buffer 104.

In step S104, the audio-data analyzing and filtering program 103 applies processing for IEC-60958 decoding and processing for DIN information decrypting on audio data at a read position indicated by the read pointer among audio data stored in the read data buffer 102.

More specifically, the audio-data analyzing and filtering program 103 applies processing for what is called IEC-60958 decoding on the audio data in the read data buffer 102. That is, the audio-data analyzing and filtering program 103 separates C bits, U bits, and an audio sample word, i.e., sampling data of sound, from audio data at a read position among subframes of audio data conforming to the IEC 60958 Standard, stored in the read data buffer 102. The audio-data analyzing and filtering program 103 separates the C bits and the U bits, and writes the result of analysis to the header section of audio data specified by the write pointer of the record data buffer 104.

The audio-data analyzing and filtering program 103 analyzes the separated C bits, etc., and checks whether the audio data read from the sound card 18 and stored in the read data buffer 102 can be recorded in compliance with the SCMS Standard. If it is determined that recording is prohibited or the audio data must not be recorded, processing for recording is stopped.

The SCMS Standard ensures that copying of digital audio data over two generations does not occur.

The audio-data analyzing and filtering program 103 detects an interval between musical pieces based on U bits when the category is CD or MD. The audio-data analyzing and filtering program 103 writes information corresponding to the interval between musical pieces in the header section of the audio data specified by the write pointer of the record data buffer 104.

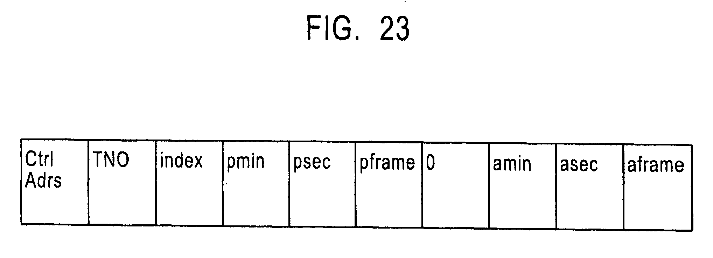

Fig. 23 is a diagram showing the structure of a subcode Q in a case where the category is CD.

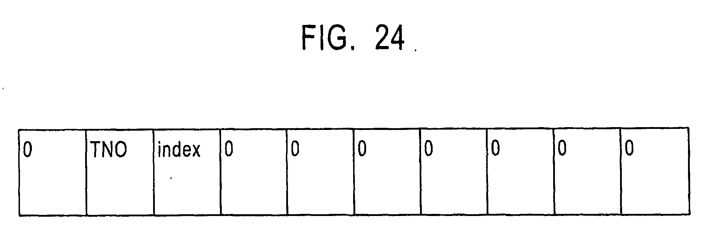

Fig. 24 is a diagram showing the structure of a subcode Q in a case where the category is MD.

An 8-bit TNO represents a musical piece number of a musical piece that is played back. The audio-data analyzing and filtering program 103 detects intervals between musical pieces based on musical piece numbers.

When the category is CD, amin, asec, and aframe of the subcode Q, each consisting of eight bits, each include BCD (binary-coded decimal) data of two digits. BCD data of amin, asec, and aframe, having six digits in total, represents an elapsed time of sound recorded on the CD with reference to the beginning of the CD. Since the repetition frequency of subcode frames is 75 Hz, aframe includes data indicating an elapsed time in units of 1/75 seconds, asec includes data indicating an elapsed time in units of 1 second, and amin includes data indicating an elapsed time in units of 1 minute.

In step S105, the audio-data analyzing and filtering program 103 determines, based on the result of analysis of the C bits, whether the audio data is emphasized. If it is determined that the audio data is emphasized, the processing proceeds to step S106, in which the audio-data analyzing and filtering program 103 deemphasizes the audio data. The procedure then proceeds to step S107.

If it is determined in step S105 that the audio data is not emphasized, processing for deemphasizing is not needed. Thus, the processing in step S106 is skipped, and the procedure proceeds to step S107.

Thus, audio data recorded by the recording application program 85 is always deemphasized.

As described above, control information such as C bits, U bits, and subcode Q is extracted, and based on the control information extracted, recording of audio data is prohibited or audio data of content is processed.

In step S107, the audio-data analyzing and filtering program 103 executes a calculation for modifying the level of the audio sample word, and writes the audio sample word with the modified level in the audio data section of the record data buffer 104. For example, the audio-data analyzing and filtering program 103 adjusts the level of the audio sample word between -∞ dB and +18 dB.

In step S108, the audio-data analyzing and filtering program 103 increments the write pointer of the record data buffer 104.

In step S109, the audio-data analyzing and filtering program 103 increments the read pointer of the read data buffer 102. The procedure then proceeds to step S110.

If it is determined in step S102 that new audio data has not been stored in the read data buffer 102, processing for writing audio data to the record data buffer 104 is not needed. Thus, processing in steps S103 to S109 is skipped, and the procedure proceeds to step S110.

In step S110, the audio-data processing program 83 selects audio data to be written to the write data buffer 111 based on an instruction from the recording application program 85, the playback application program 86, or the kernel 82.

In step S111, the IEC-60958 encoding program 106 determines whether the playback data buffer 109 has been selected, that is, whether audio data stored in the playback data buffer 109 is to be written to the write data buffer 111. If it is determined that the playback data buffer 109 has been selected, the processing proceeds to step S112, in which the IEC-60958 encoding program 106 determines whether new audio data has been stored in the playback data buffer 109.

If it is determined in step S112 that new audio data has been stored in the playback data buffer 109, the processing proceeds to step S113. In step S113, the IEC-60958 encoding program 106 switches the switch 105 to obtain audio data from a read position of the playback data buffer 109 specified by the read pointer.

In step S114, the IEC-60958 encoding program 106 causes the playback data buffer 109 to increment the read pointer.

In step S115, the IEC-60958 encoding program 106 encodes audio data obtained by the processing in step S113 according to IEC 60958, and calculates a peak value of the audio data. The procedure then proceeds to step S117.

More specifically, in step S115, the IEC-60958 encoding program 106 extracts control information included in the header section of the audio data read from the playback data buffer 109, and processes the audio data of content based on the control information.

If it is determined in step S112 that new audio data has not been stored in the playback data buffer 109, the processing proceeds to step S116. In step S116, the IEC-60958 encoding program 106 switches the switch 105, encodes zero data supplied from the zero-data generating program 110 according to IEC 60958, and calculates a peak value (i.e., zero) of the audio data. The procedure then proceeds to step S117.

If it is determined in step S111 that the playback data buffer 109 has not been selected, the audio data stored in the playback data buffer 109 need not be processed. Thus, the processing in steps S112 to S116 is skipped, and the procedure proceeds to step S117.

In step S117, the IEC-60958 encoding program 106 determines whether the record data buffer 104 has been selected, that is, whether audio data stored in the record data buffer 104 is to be written to the write data buffer 111. If it is determined that the record data buffer 104 has been selected, the processing proceeds to step S118, in which the IEC-60958 encoding program 106 determines whether new audio data has been stored in the record data buffer 104.

If it is determined in step S118 that new audio data has been stored in the record data buffer 104, the processing proceeds to step S119, in which the IEC-60958 encoding program 106 switches the switch 105 to obtain audio data from the playback data buffer 109.

In step S120, the IEC-60958 encoding program 106 encodes the audio data obtained by the processing in step S119 according to IEC 60958, and calculates a peak value of the audio data. The procedure then proceeds to step S122.

If it is determined in step S118 that new audio data has not been stored in the record data buffer 104, the processing proceeds to step S121. In step S121, the IEC-60958 encoding program 106 switches the switch 105, encodes zero data supplied from the zero-data generating program 110 according to IEC 60958, and calculates a peak value (i.e., zero) of the audio data. The procedure then proceeds to step S122.

If it is determined in step S117 that the record data buffer 104 has not been selected, audio data stored in the record data buffer 104 need not be processed. Thus, the processing in steps S118 to S121 is skipped, and the procedure proceeds to step S122.

In step S122, the IEC-60958 encoding program 106 determines whether neither the record data buffer 104 nor the playback data buffer 109 has been selected. If it is determined that neither the record data buffer 104 or the playback data buffer 109 has been selected, the processing proceeds to step S123. In step S123, the IEC-60958 encoding program 106 switches the switch 105, encodes zero data supplied from the zero-data generating program 110 according to IEC 60958, and calculates a peak value (i.e., zero) of the audio data. The procedure then proceeds to step S124.

If it is determined in step S122 that one of the record data buffer 104 and the playback data buffer 109 has been selected, audio data encoded according to IEC 60958 has already been obtained. Thus, the processing in step S123 is skipped, and the procedure proceeds to step S124.

In step S124, the IEC-60958 encoding program 106 writes the audio data encoded according to IEC 60958 at a position indicated by the write pointer of the write data buffer 111.

In step S125, the IEC-60958 encoding program 106 increments the write pointer of the write data buffer 111.

In step S126, the write-control program 112 writes audio data at a position indicated by the read pointer of the write data buffer 111 to the sound card 18. More specifically, the write-control program 112 requests, by a system call, the kernel 82 to write audio data to the sound card 18, and supplies audio data at a position indicated by the read pointer of the write data buffer 111 to the kernel 82. The kernel 82 causes the device driver 81 to write the audio data to the sound card 18. The audio data supplied to the sound card 18 is output as a stream.

In step S127, the write-control program 112, the write-control program 112 reads playback information of the audio data at the position indicated by the write pointer of the write data buffer 111.

In step S128, the write-control program 112 increments the read pointer of the write data buffer 111. The processing then returns to step S101, and the processing is repeated.

If it is determined in step S101 that a stop has been requested, the processing ends.

In the processing executed by the audio-data analyzing and filtering program 103 and the IEC-60958 encoding program 106 for analyzing and processing audio data, audio data stored in the read data buffer 102, the record data buffer 104, the playback data buffer 109, and the write data buffer 111 is transferred.

The processing is step S104, the processing in step S115, the processing in step S116, the processing in step S120, the processing in step S121, and the processing in step S123 are executed in an appropriate order, so that time needed for processing audio data is reduced.

Furthermore, when audio data stored in the record data buffer 104 is stored in the write data buffer 111, audio data to be recorded can be output as a stream, allowing playback simultaneously with recording.

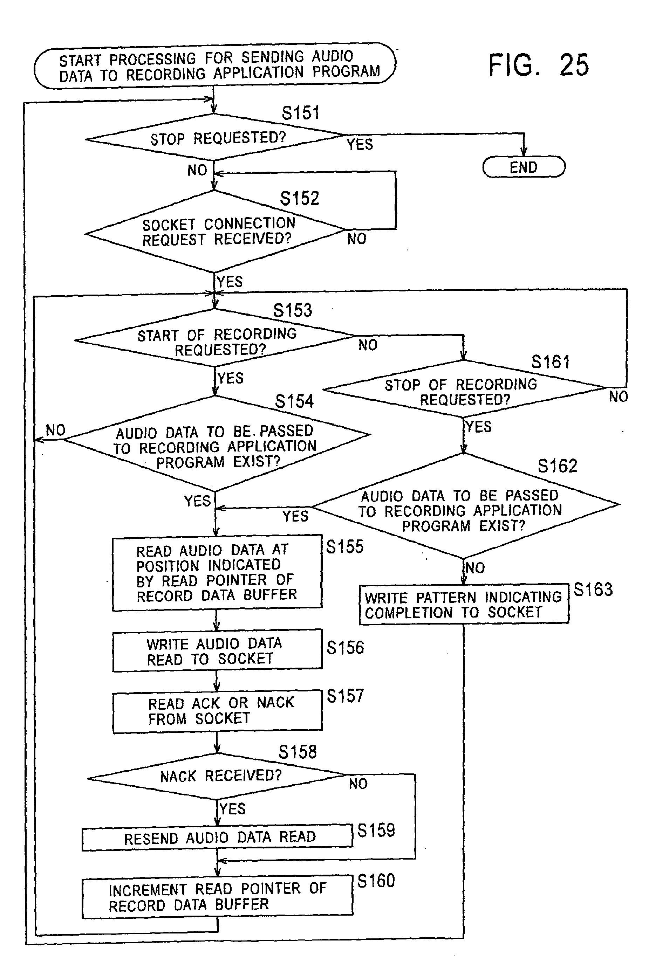

Next, processing executed by the sending control program 107 for sending audio data stored in the record data buffer 104 to the recording application program 85 will be described with reference to a flowchart shown in Fig. 25.

In step S151, the sending control program 107 determines whether a stop has been requested by the kernel 82. If it is determined that a stop has not been requested, the procedure proceeds to step S152.

In step S152, the sending control program 107 determines whether a socket connection request from the recording application program 85 has been received. If it is determined that a socket connection request has not been received, the processing returns to step S152, and the processing for determination is repeated until a socket connection request is received.

If it is determined in step S152 that a socket connection request has been received, the sending control program 107 establishes a socket. The processing then proceeds to step S153, in which the sending control program 107 determines whether a start of recording has been requested by the recording application program 85, based on a message sent via a socket for exchanging messages.

To describe the processing for establishing a socket more specifically, the sending control program 107 requests the kernel 82 to establish a socket with the recording application program 85, and the kernel 82 establishes a socket between the audio-data processing program 83 and the recording application program 85.

If it is determined in step S153 that a start of recording has been requested by the recording application program 85, the processing proceeds to step S154. In step S154, the sending control program 107 sets the read pointer of the record data buffer 104 to determine a position where recording is to be started. The sending control program 107, based on the read pointer of the record data buffer 104, determines whether audio data to be passed to the recording application program 85 exists. If it is determined that audio data to be passed to the recording application program 85 exists, the processing proceeds to step S155, in which the sending control program 107 reads audio data at a position indicated by the read pointer of the record data buffer 104.

In step S156, the sending control program 107 writes the audio data read to a socket for transferring audio data, established by the socket service program 84-1, with the audio-data processing program 83 as input and the recording application program 85 as output.

For example, the sending control program 107 specifies a port number corresponding to the recording application program 85 and calls a "send" method of a socket object to write audio data to the socket. When the "send" method of the socket object has been called by the sending control program 107, the socket service program 84-1 receives the audio data written from the sending control program 107 and stores the audio data in a predetermined buffer.

Now, transfer of audio data using the record data buffer 104 and a socket in a processing system that does not ensure a turnaround time and that employs an event-driven multitask operating system will be described in more detail.

The record data buffer 104 spools audio data of a size not smaller than a size needed for recording, and the audio data stored in the record data buffer 104 is sent to the recording application program 85. Thus, dropout of audio data being recorded by the recording application program 85 is prevented.

An issue that must be considered in an event-driven multitask operating system is how to notify another party of completion of updating of audio data to be recorded or played back.

For example, when audio data sampled at 44.1 KHz is sent from the audio-data processing program 83 to the recording application program 85 by units of 4,096 bytes, the audio-data processing program 83 must notify the recording application program 85 of completion of updating of audio data every 23.22 msec.

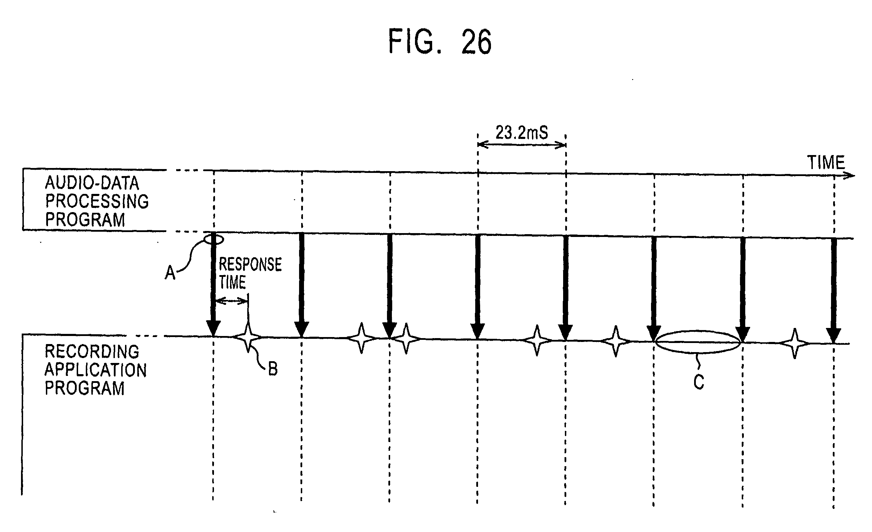

Fig. 26 shows an example of processing in a case where a socket is not used.

When a socket is not used, processing for issuing a notification that audio data has been updated raises an overhead. Conventionally, in order to issue an interprocess notification without using a socket, it has been the case to send a signal to an application program or to use a message queue for interprocess communication.

In Fig. 26, an arrow designated as A indicates represents a notification from the audio-data processing program 83 to the recording application program 85. In Fig. 26, a star symbol designated as B represents processing for a reply by the recording application program 85 to the notification.

When a signal is sent to an application program or a message queue for interprocess communication is used, the processing has a low priority. Thus, in addition to the problem of process scheduling of the operating system, a problem arises that response time of a program that receives notifications is inconstant.

Similarly, when a shared memory is used, notifications take relatively long time.

Also, for example, in processing for polling that is executed within a single thread, even if the setting is such that data is processed constantly every 10 msec, the interval could become 20 msec depending on the status of the system.

In Fig. 26, as indicated by C, it could occur that the recording application program 85 fails to execute processing for a reply within 23.22 msec since a notification from the audio-data processing program 83 is received by the recording application program 85. In such as case, loss of audio data occurs.

In contrast, when a socket is used, the socket plays the role of a pipe of data interconnecting processes (application programs).

A process that sends audio data via the socket is allowed to know whether the socket is full of audio data. When the socket is not full of audio data, the process is allowed to send audio data until the socket becomes full of audio data. The process that sends audio data via the socket depends only on the status of the socket, and does not depend on the status of other application programs.

A process that receives audio data via the socket is allowed to obtain audio data if audio data exists in the socket, and waits reading when audio data does not exist in the socket (other processing is executed). The process that receives audio data via the socket is allowed to know whether the socket is empty, and to obtain audio data until the socket becomes empty.

That is, when viewed from the audio-data processing program 83, use of the socket provides an initiative for sending audio data to the recording application program 85 or the playback application program 86 so that dropout of audio data will be prevented during playback or recording.

Now, a socket will be described in further detail.

Most interprocess communications assume use of shared resources on a single computer. That is, most interprocess communications are common in that only one process that is being executed by the computer is allowed to use resources, although resources used differ among interprocess communication methods, such as a filesystem space, a shared memory, or a message queue.

As an example of operating systems, UNIX® employs communication means called socket interface, which is an extension of the mechanism of interprocess communications called pipe. Sockets are designed so that communications over networks can be handled. A feature of sockets is high versatility.

More specifically, a process on a computer and a process on another computer are allowed to communicate with each other using a socket. Use of a socket allows implementing a client/server system that is distributed over a network. Without limitation to UNIX®, specifications of sockets for Windows® are also publicly available. Thus, different operating systems are allowed to communicate with each other over a network.

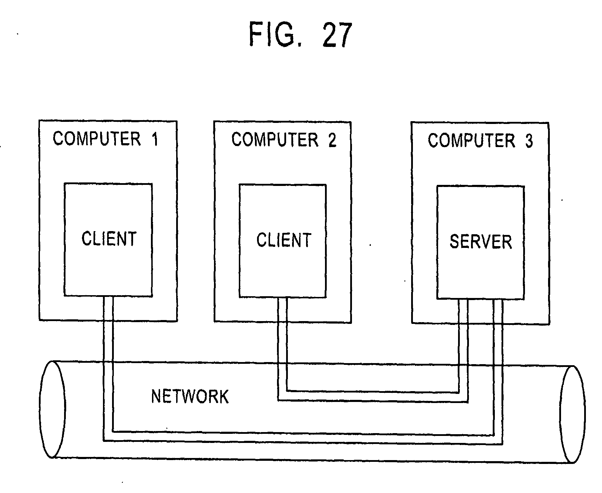

A socket is a communication mechanism that allows development of a local client/server system or a network-based client/server system on a single machine, as shown in Fig. 27. Functions provided by UNIX®, such as printing, remote login, and communication functions of FTP (File Transfer Protocol) service and network utilities, are implemented using sockets.

An operation of a socket is often described in comparison to a phone call to a company or the like. That is, a phone call to a company is transferred to an appropriate section by a recipient (server process), and is further transferred to an appropriate person (server socket). At this time, the call received (client) becomes connected to an appropriate call destination (endpoint), and the operator acting therebetween is allowed to receive another phone call.

Under UNIX®, connection by such a socket is established in the following manner. First, a server application creates a socket. The socket is a resource of the operating system, allocated to a server process. At the time the socket has been created by the server, other processes are not allowed to access the socket.

Then, the server process assigns a name to the socket. When local communications are carried out, a filename on the filesystem is assigned as the name of the socket. On the other hand, in the case of a network socket, a service identifier (port number and access point) corresponding to a particular network that the client can access is used as the socket name.

The server process waits for an access to the named socket by a client. When the access by the client is permitted by the server, a new socket that is different from the named socket is created, and then the new socket is used for communications between the client and the server. The named socket is reused to wait for connection requests from other clients.

A socket is characterized by three properties, namely, domain, type, and protocol. Furthermore, a socket has an address, and the address is used as a name of the socket. The format of the address varies depending on domain.

The domain of a socket specifies a network that is used for communications by the socket. The most frequently used domain of a socket is the Internet network. The Internet network is used in many UNIX® LAN (local area network) environments and in the Internet. In a protocol that supports the Internet network (IP (Internet Protocol)), communications are carried out using an address family called IP addresses. In most cases, names are used to identify machines on the Internet; however, the names are translated to low-level IP addresses before actually carrying out communications. In order to connect to a service via a socket over a network, a client must know or be capable of finding an IP address of the server computer.

On a server, it is possible that a plurality of services is being provided. Thus, a client specifies a particular service of a machine at the destination of connection, using an IP port associated with the IP address. Within the system, ports are identified using unique port numbers. With external machines, a connection destination is specified using a combination of IP address and port number. A socket is an endpoint of communication, and the socket must be connected to a port before actually carrying out communication.

The server waits for an access to a particular port. Well-known services have predetermined port numbers assigned thereto. For example, FTP (File Transfer Protocol) has a port number 21, and HTTP (Hypertext Transfer Protocol) has a port number 80.

Furthermore, a socket has a type. This is because a single domain is often provided with various communication means with different characteristics. A domain socket called UNIX® domain provides a bilateral communication path with high reliability. In the case of a network domain, characteristics of the network must be considered. Under the Internet Protocol, two different levels of service, namely, stream and datagram, exist. A stream socket provides a connection based on a sequential bilateral byte stream with high reliability. Thus, it is ensured that loss, duplicates, or misordering of data that has been sent does not occur. In the case of the other service, i.e., a datagram socket, connection is not established or maintained. A datagram socket is suitable for one-time query for information, regular supply of status information, collection of log with low priority, and the like.

Stream sockets are used for transfer of audio data.

Next, an operation of a socket in the recording/playback apparatus according to the present invention will be described.

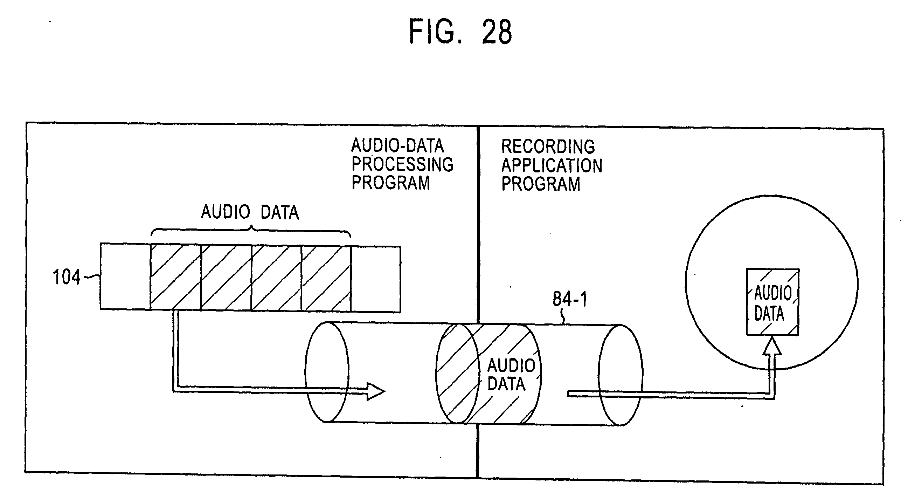

Fig. 28 is a diagram showing processing executed in a case where the audio-data processing program 83 has audio data to be sent to the recording application program 85.

In order to receive audio data from the audio-data processing program 83, the recording application program 85 repeats processing for reading audio data of a predetermined size from a socket for transferring audio data from the audio-data processing program 83 to the recording application program 85, established by the socket service program 84-1.

The recording application program 85, when audio data has been read into the socket, obtains audio data of the predetermined size from the socket, and executes subsequent processing immediately after the audio data is obtained from the socket. The recording application program 85, when audio data has not been read into the socket, tries to read audio data from the socket, but it execute subsequent processing immediately since audio data does not exist in the socket.

The processing by the recording application program 85 for reading audio data from the socket is immediately executed and ends whether audio data has been read into the socket or audio data has not been read into the socket, and subsequent processing is executed.

That is, the processing (process) executed by the recording application program 85 for reading audio data from the socket always completes only in a time needed for reading audio data. Thus, the processing executed by the recording application program 85 for reading audio data from the socket does not wait for change in the status of other processes, so that the processing does not occupy resources of the recording/playback apparatus longer than the time needed for the processing for reading audio data.

When audio data to be sent to the recording application program 85 has been stored in the record data buffer 104, the audio-data processing program 83 writes the audio data to the socket for transferring audio data from the audio-data processing program 83 to the recording application program 85, established by the socket service program 84-1.

When the audio data has been written to the socket, the recording application program 85 is ready for reading, so that the recording application program 85 reads audio data as soon as the audio data arrives at the socket.

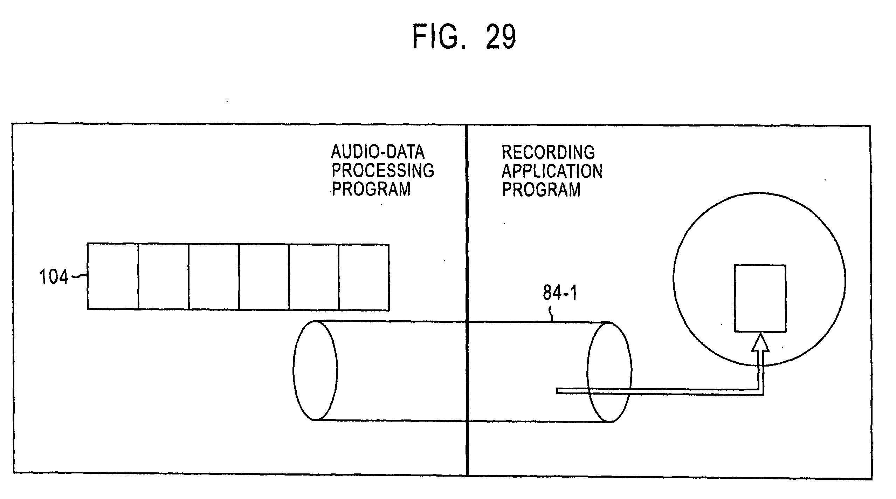

When audio data to be sent to the recording application program 85 has not been stored in the record data buffer 104, the audio-data processing program 83 does not write audio data to the socket, as shown in Fig. 29. The recording application program 85 executes the processing for reading audio data as long as audio data exists in the socket, and does not execute the processing for reading audio data when audio data does not exist in the socket.

As described above, the processing in step S156 does not occupy resources uselessly, and completes in a period needed for writing audio data to the socket.

Referring back to Fig. 25, in step S157, as described with reference to the flowchart shown in Fig. 11, a message including ACK or NACK is transmitted from the recording application program 85, so that the sending control program 107 reads the message including ACK or NACK from a socket used for exchanging messages between the audio-data processing program 83 and the recording application program 85.

In step S158, the sending control program 107 extracts ACK or NACK from the message to determine whether NACK has been received. If it is determined that NACK has been received, the processing proceeds to step S159, in which the sending control program 107 resends the audio data read by the processing in step S155. That is, the sending control program 107 rewrites the audio data to the socket for transferring audio data with the audio-data processing program 83 as input and the recording application program 85 as output, established by the socket service program 84-1. The processing then proceeds to step S160.

If it is determined in step S158 that ACK has been received, it is understood that no data loss has occurred in the audio data received by the recording application program 85, so that the processing for resending audio data is not needed. Thus, the processing in step S169 is skipped, and the procedure proceeds to step S160.

In step S160, the sending control program 107 increments the read pointer of the record data buffer 104. The processing then returns to step S153, and the processing for sending audio data via a socket is repeated.

If it is determined in step S154 that audio data to be passed to the recording application program 85 does not exist, the processing for sending audio data to the recording application program 85 need not be executed. Thus, the processing returns to step S153, in which the determination as to whether a start of recording has been requested is repeated.

If it is determined in step S153 that a start of recording has not been requested, the processing proceeds to step S161. In step S161, the sending control program 107 determines, based on the message transmitted via the socket used for exchanging messages, whether a stop of recording has been requested by the recording application program 85.

If it is determined in step S161 that a stop of recording has been requested, the processing proceeds to step S162. In step S162, the sending control program 107 determines, based on the read pointer and the write pointer of the record data buffer 104, whether audio data to be passed to the recording application program 85 exists. If it is determined that audio data to be passed to the recording application program 85 exits, the entire audio data must be sent to the recording application program 85. Thus, the processing proceeds to step S155, in which the sending control program 107 executes the processing for sending audio data.

Whether audio data to be passed to the recording application program 85 exists in the record data buffer 104 can be determined based on whether the value of the read pointer of the record data buffer 104 and the value of the write pointer of the record data buffer 104 coincide with each other.

If it is determined in step S162 that audio data to be passed to the recording application program 85 does not exist, the processing proceeds to step S163, in which a pattern indicating completion is written to the socket. The processing then returns to step S151, and then the processing is repeated.

The pattern indicating completion of playback, used in step S163, is a pattern that is set in the header section of the structured audio data shown in Fig. 21. The pattern indicating completion is, for example, a pattern of alternating 0s and 1s, as shown in Fig. 30, which does not appear in an ordinary header section.

If it is determined in step S151 that a stop has been requested, the processing ends.

Next, processing for recording by the recording application program 85 will be described.

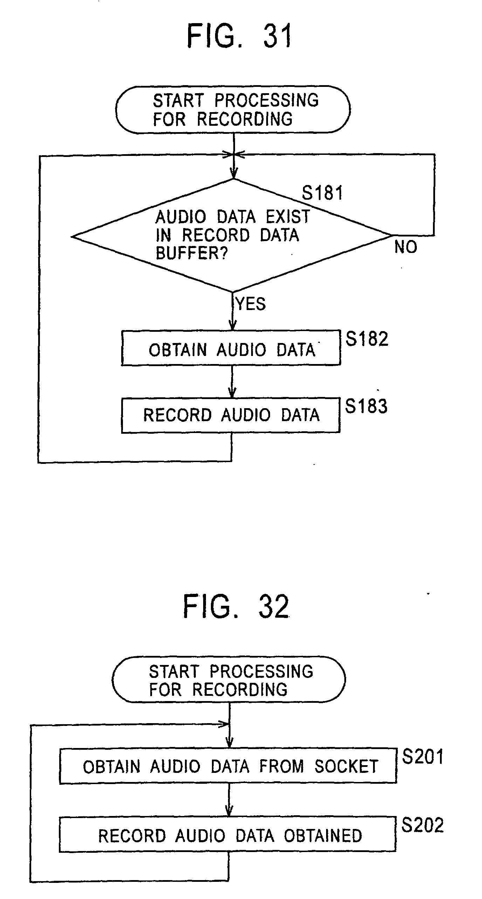

In order to clarify the processing by the recording application program 85 in the recording/playback apparatus according to the present invention by comparison, Fig. 31 shows a flowchart of conventional processing for recording.

In step S181, a conventional recording/playback apparatus determines whether audio data exists in a record data buffer. If it is determined that audio data does not exist in the record data buffer, the processing returns to step S181, and the processing is repeated until audio data is stored in the record data buffer.

If it is determined in step S181 that audio data exists in the record data buffer, the processing proceeds to step S182, in which the recording/playback apparatus obtains audio data from the record data buffer.

In step S183, the recording/playback apparatus records the audio data obtained. The processing then returns to step S181, and the processing for recording is repeated.

In the conventional processing for recording described above, in step S181, the processing for determination is repeated until audio data is stored in the record data buffer for a maximum time allocated for the process. Thus, while the processing for determination is being repeated, resources of the recording/playback apparatus are occupied continuously by the processing for determination.

During this time, other processes are not allowed to use the record data buffer. For example, other processes are not allowed to write audio data read from a sound card to the record data buffer.

Thus, in step S181 of the conventional processing for recording, the processing for determination is repeated until audio data is stored in the record data buffer, causing delays for other processes. The delays for other processes affect the process of processing for recording, causing a delay for a process of processing for recording.

Fig. 32 is a flowchart showing processing for recording by the recording application program 85 in the recording/playback apparatus according to the present invention.

In step S201, the recording application program 85 obtains audio data from a socket for transferring audio data from the audio-data processing program 83 to the recording application program 85, established by the socket service program 84-1.

In the processing in step S201, when audio data exists in the socket, the recording application program 85 immediately obtains audio data from the socket, and the processing in step S201 ends.

In the processing in step S201, when audio data does not exist in the socket, the recording application program 85 immediately ends the processing in step S201 without obtaining audio data from the socket.

For example, the recording application program 85 sends a "receive" message to a socket object, whereby the socket service program 84-1 takes on control. The socket service program 84-1, based on a port number associated with the audio data received and a port number corresponding to the recording application program 85 stored in the kernel 82, transfers the audio data to a receiving buffer (receiving packet object) of the recording application program 85, and returns control to the recording application program 85. Thus, it appears to the recording application program 85 that the receiving buffer receives audio data when a "receive" message is sent to the socket object.

In step S202, the recording application program 85 records the audio data obtained. The processing then returns to step S201, and the processing for recording is repeated.

More specifically, in step S202, the recording application program 85 requests the kernel 82 to record audio data on the HDD 14, and supplies the audio data to the kernel 82. The kernel 82 causes the device driver 81 to record the audio data on the HDD 14.

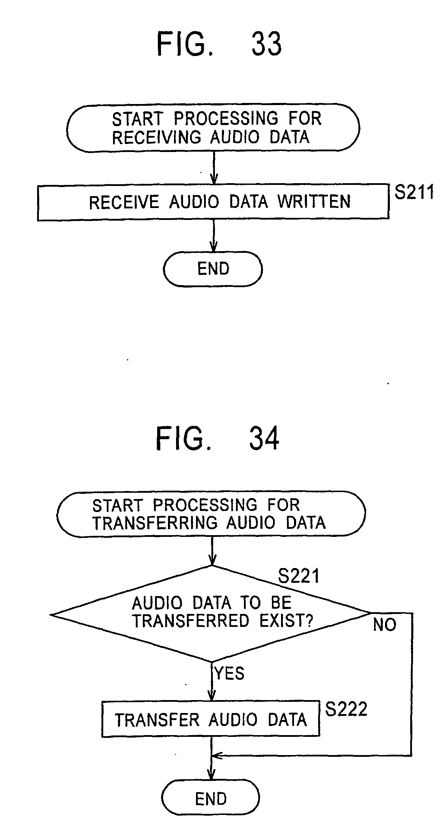

Next, processing executed by the socket service program 84-1 for receiving audio data in a process, executed in association with the processing in step S156 shown in Fig. 25, will be described with reference to a flowchart shown in Fig. 33.

In step S211, the socket service program 84-1 receives the audio data written by the sending control program 107 by the processing in step S156, and then the processing ends. The audio data received is stored, for example, in a predetermined buffer of the socket service program 84-1.

Fig. 34 is a flowchart showing processing for transferring audio data by the socket service program 84-1 in a process, executed in association with the processing in step S201 shown in Fig. 32.

In step S221, the socket service program 84-1 determines whether audio data to be transferred to the recording application program 85 exists. If it is determined that audio data to be transferred exists, the processing proceeds to step S222, in which the socket service program 84-1 transfers audio data to the recording application program 85, and then the processing ends.

If it is determined in step S221 that audio data to be transferred does not exist, the processing in step S222 is skipped, and the processing ends immediately.

As described above, by the processing for recording according to the present invention, the time needed for the processing by the recording application program 85 for obtaining audio data never exceeds the time needed for reading audio data from a socket. That is, resources such as the record data buffer 104 are not occupied by a process with a long execution time.

Accordingly, the processing for recording does not affect the processing for reading audio data from the sound card 18.

Therefore, a delay is not caused in audio data supplied from the audio-data processing program 83 to the recording application program 85, so that loss of audio data does not occur when audio data supplied from the outside is recorded.

As described above, in an arrangement wherein content supplied as a stream is received and wherein recording of the content received on a content recording medium is controlled, content can be recorded.

Furthermore, in an arrangement wherein a first program executed on a multitask operating system controls reception of content supplied as a stream, wherein a second program executed on the multitask operating system controls recording of content on a content recording medium, and wherein a third program executed on the multitask operating system, in a first process, receives content to be transferred to the second program from the first program, and the third program, in a second process, immediately terminates the second process when content to be transferred does not exist while transferring content to the second program before terminating the second process when content to be transferred exists, content supplied as a stream can be readily recorded with improved ease and without causing a loss by an apparatus controlled by the multitask operating system.

Next, a method for the recording application program 85 to obtain an elapsed recording time will be described.

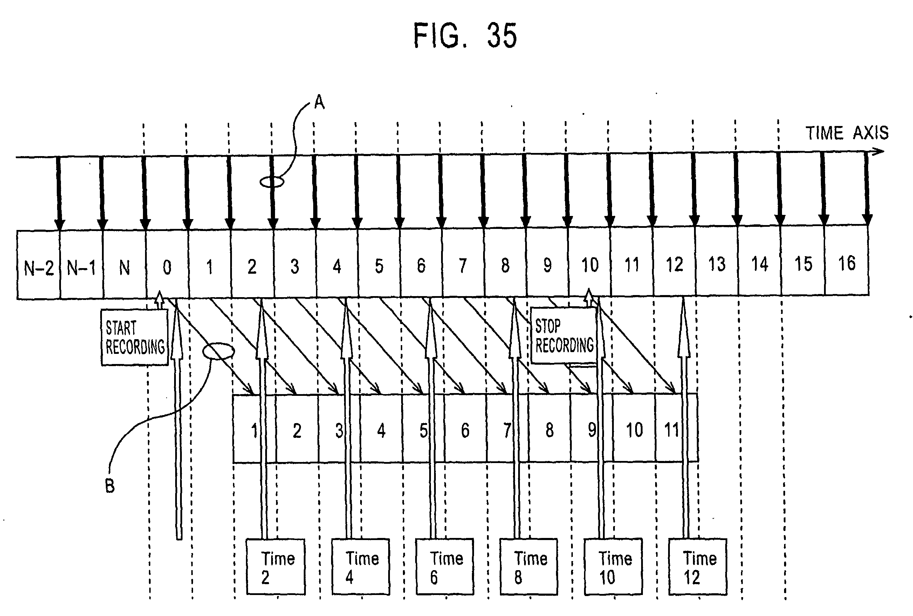

Fig. 35 is a diagram showing processing executed by the recording application program 85 for obtaining an elapsed recording time.

In Fig. 35, an arrow designated as A indicates timing for the audio-data processing program 83 to read audio data from the sound card 18. In Fig. 35, an arrow designated as B indicates timing for the recording application program 85 to obtain audio data from the audio-data processing program 83.

In the audio-data processing program 83, the read data buffer 102 and the record data buffer 104 are provided. Thus, when the audio-data processing program 83 is used, the recording application program 85 is not allowed to know an accurate elapsed recording time only from the amount of audio data received. This is because audio data obtained from the audio-data processing program 83 by the recording application program 85 is older than audio data currently being input to the sound card 18.

Thus, first, the recording application program 85 notifies the audio-data processing program 83 of a start of recording. The audio-data processing program 83, upon receiving the notification, sequentially assigns numbers from 0 to the serial numbers of the header sections shown in Fig. 22. The recording application program 85 regularly reads from the audio-data processing program 83 the serial numbers assigned by the audio-data processing program 83 to the audio data read from the sound card 18, for example, by polling. Since the number of samples stored in the audio data section of the audio data stored in the record data buffer 104 is fixed, in principle, an elapsed time can be calculated from the serial numbers and the number of samples.

When a track change has occurred, an elapsed time is calculated in the following manner.

The recording application program 85 receives audio data from the audio-data processing program 83, and determines whether musical piece has changed based on the track-change flag (shown in Fig. 22) of the header section of the audio data received. The recording application program 85 remembers a serial number obtained from the audio-data processing program 83 by polling when change in musical piece is detected and a serial number stored in audio data received by the transfer.

An elapsed recording time since a change in musical piece (musical piece number) is calculated based on (serial number obtained by polling) - (serial number received by transfer).

For example, if the serial number of the audio data received by the transfer is 4, when a change in musical piece has been detected based on the track-change flag, the recording application program 85, if the serial number obtained by polling is 6, subtracts 4 from 6, which is the serial number obtained by polling, and calculates an elapsed recording time based on 2, which is the result of subtraction.

Similarly, if the serial number obtained by polling is 8, the recording application program 85 subtracts 4 from 8, which is the serial number obtained by polling, and calculates an elapsed recording time based on 4, which is the result of subtraction. If the serial number obtained by polling is 10, the recording application program 85 subtracts 4 from 10, which is the serial number obtained by polling, and calculates an elapsed recording time based on 6, which is the result of subtraction.

Accordingly, even when musical piece has changed (a track change has occurred) during recording, an elapsed recording time from the beginning of a musical piece can be calculated accurately.

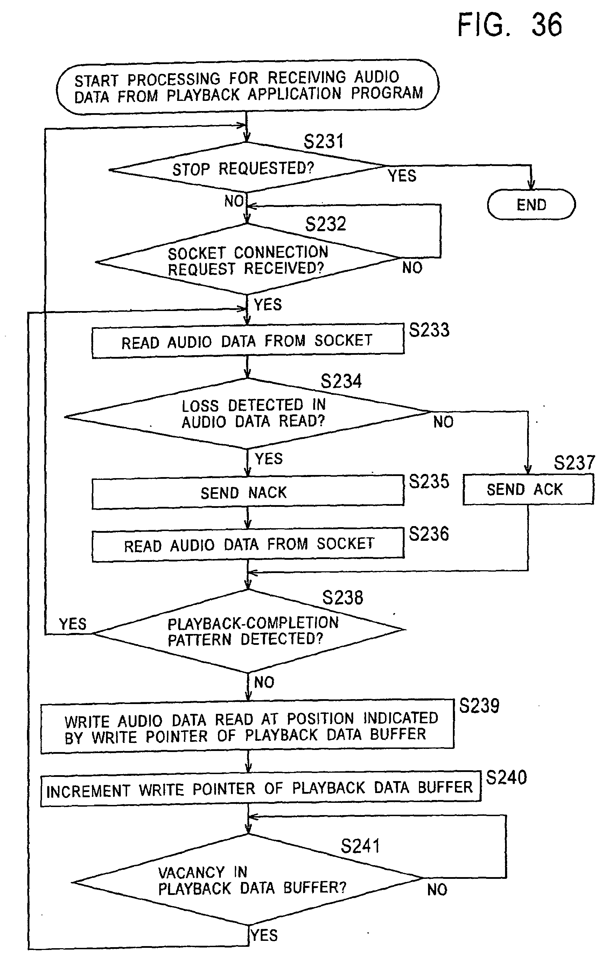

Next, processing executed by the audio-data processing program 83 for receiving audio data from the playback application program 86 will be described with reference to a flowchart shown in Fig. 36.

In step S231, the receiving control program 108 determines whether a stop has been requested by the kernel 82. If it is determined that a stop has not been requested, the processing proceeds to step S232, in which the receiving control program 108 determines whether a socket connection request from the playback application program 86 has been received.

If it is determined in step S232 that a socket connection request has not been received, the processing returns to step S232, and the processing for determination is repeated until a socket connection request is received.

If it is determined in step S232 that a socket connection request has been received, the processing proceeds to step S233, in which the receiving control program 108 establishes a socket and reads audio data from the socket.

More specifically, the receiving control program 108 requests the kernel 82 to establish a socket with the playback application program 86, and the kernel 82 establishes a socket between the receiving control program 108 and the playback application program 86.

The receiving control program 108 reads audio data written to the socket by the playback application program 86.

In step S234, the receiving control program 108 determines whether a loss has occurred in the audio data based on prestored data representing a size of audio data and the size of audio data received (e.g., the number of bytes). If a loss is detected in the audio data, the processing proceeds to step S235, in which the receiving control program 108 sends NACK to the playback application program 86 via a socket for exchanging messages.

In step S236, the receiving control program 108 reads from the socket the audio data resent the playback application program 86. The procedure then proceeds to step S238.

If a loss in the audio data is not detected in step S234, resending of the audio data need not be requested. Thus, the processing proceeds to step S237, in which the receiving control program 108 sends ACK to the playback application program 86 via a socket for exchanging messages. The procedure then proceeds to step S238.

In step S238, the receiving control program 108 determines whether the pattern of the header section of the audio data read from the socket coincides with the playback completion pattern, such as the pattern shown in Fig. 30. If the playback completion pattern is not detected, the processing for reception is continued. Thus, the processing proceeds to step S239, in which the receiving control program 108 writes the audio data read from the socket to a position indicated by the write pointer of the playback data buffer 109.

In step S240, the receiving control program 108 increments the write pointer of the playback data buffer 109.

In step S241, the receiving control program 108 determines whether the playback data buffer 109 has a vacancy based on the values of the write pointer and the read pointer of the playback data buffer 109. If it is determined that the playback data buffer 109 does not have a vacancy, the processing for determination in step S241 is repeated until a vacancy arises in the playback data buffer 109.

If it is determined in step S241 that the playback data buffer 109 has a vacancy, the processing returns to step S233, and the processing for receiving audio data is repeated.

Now, processing for sending audio data from the playback application program 86 to the audio-data processing program 83 via a socket will be described.

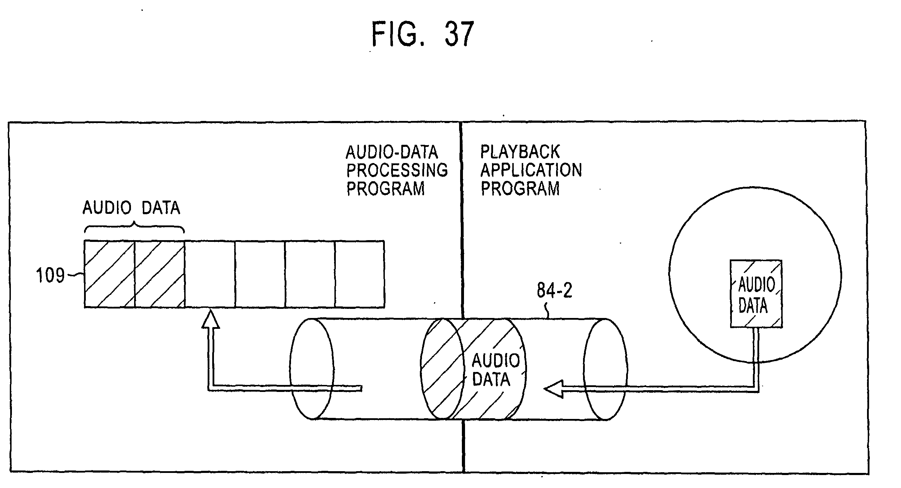

Fig. 37 is a diagram showing processing executed in a case where the playback data buffer 109 has a vacancy.

When audio data to be sent exists, in order to send the audio data to the audio-data processing program 83, the playback application program 86 executes processing for writing the audio data to a socket for transferring audio data from the playback application program 86 to the audio-data processing program 83, established by the socket service program 84-2. When audio data to be sent does not exist, the playback application program 86 does not execute processing for writing audio data to the socket.

When audio data to be sent to the audio-data processing program 83 exists, the playback application program 86 writes audio data of a predetermined size to the socket, and executes subsequent processing immediately. When audio data to be sent to the audio-data processing program 83 does not exists, since audio data is not available, the playback application program 86 executes subsequent processing immediately.

The processing by the playback application program 86 for writing audio data to the socket is immediately executed and ends whether audio data is written to the socket or audio data is not written to the socket, and subsequent processing is executed.

That is, the processing by the playback application program 86 for writing audio data to the socket always completes only in a time needed for the processing for writing audio data. Thus, the processing by the playback application program 86 for writing audio data to the socket does not wait for change in the status of other processes, and does not occupy resources of the recording/playback apparatus longer than the time needed for the processing for writing audio data.

When the playback data buffer 109 has a vacancy, in order to receive audio data from the playback application program 86, the audio-data processing program 83 reads audio data of a predetermined size from a socket for transferring audio data from the playback application program 86 to the audio-data processing program 83, established by the socket service program 84-2.

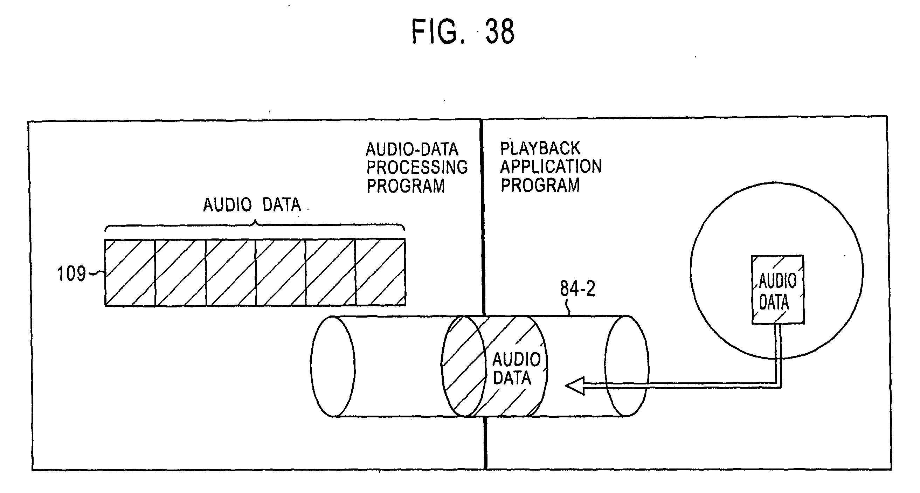

When the playback data buffer 109 does not have a vacancy, the audio-data processing program 83 does not read audio data from the socket, as shown in Fig. 38. Regardless of whether the playback data buffer 109 has a vacancy, the playback application program 86 executes processing for writing audio data to the socket when audio data to be sent exists, and does not execute processing for writing audio data to the socket when audio data to be sent does not exist.

If the playback completion pattern is detected in step S238, it is understood that a notification of end of audio data has been issued by the playback application program 86. Thus, the processing returns to step S231, and the processing for determining whether a stop request has been received is executed.

If it is determined in step S231 that a stop has been requested, the processing ends.

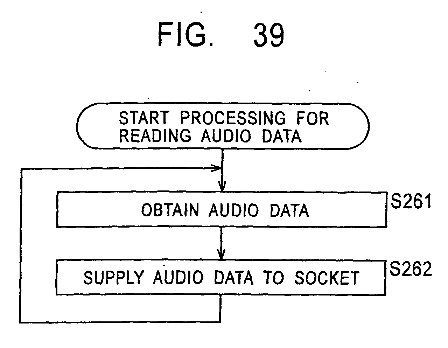

Fig. 39 is a flowchart showing processing for reading audio data by the playback application program 86.

In step S261, the playback application program 86 obtains audio data to be played back from the CD 91.

More specifically, in step S261, the playback application program 86 requests the kernel 82 to read audio data from the CD 91. The kernel 82 causes the device driver 81 to control the CD-ROM drive 15 to read audio data recorded on the CD 91, and supplies the audio data to the playback application program 86.

The playback application program 86 reads audio data similarly from the HDD 14.

In step S262, the playback application program 86 supplies the audio data to a socket for transferring audio data from the playback application program 86 to the audio-data processing program 83, established by the socket service program 84-2. The processing then returns to step S261, and the processing for playback is repeated.

In the processing in step S262, when audio data to be supplied to the audio-data processing program 83 exists, the playback application program 86 immediately supplies the audio data to the socket, and the processing in step S262 ends.

On the other hand, in the processing in step S262, when audio data to be supplied to the audio-data processing program 83 does not exit, the playback application program 86 does not supply audio data to the socket, and immediately ends the processing in step S262.

Processing for allowing the socket service program 84-2 to receive audio data from the playback application program 86 is the same as the processing described with reference to the flowchart shown in Fig. 33, so that description thereof will be omitted.

Processing for allowing the socket service program 84-2 to transfer audio data to the audio-data processing program 83 is the same as the processing described with reference to Fig. 34, so that description thereof will be omitted.

As described above, with the processing for playback according to the present invention, the time needed for processing by the playback application program 86 for supplying audio data never exceeds the time needed for writing audio data to the socket. Thus, resources such as the playback data buffer 109 are not occupied by a process with a long execution time.

Therefore, the processing for playback does not affect the processing for writing audio data to the sound card 18.

Accordingly, a delay is not caused in audio data supplied from the playback application program 86 to the audio-data processing program 83, and loss does not occur in audio data when the audio data is output to the outside.

As described above, in the recording/playback apparatus according to the present invention, even if it is controlled by a multitask operating system that does not ensure timing of execution of processes, stable playback and recording are allowed without causing sound dropout or sound skipping, which is an obvious requirement for an audio apparatus.

As described above, in an arrangement wherein content is read from a recording medium and is sent as a stream, content can be played back.

Furthermore, in an arrangement wherein a first program executed on a multitask operating system controls content recorded on a content recording medium, wherein a second program executed on the multitask operating system controls sending of a stream of content stored in a buffer, and wherein a third program executed on the multitask operating system, in a first process, receives content to be transferred to the second program from the first program, and the third program, in a second process, when a buffer has a vacancy, terminates the second process immediately when content to be transferred does not exist while transferring content to the buffer before terminating the second process when content to be transferred exists, content can be played back as a stream with improved ease and without causing a loss by an apparatus controlled by the multitask operating system.

Next, a method for the playback application program 86 to obtain an elapsed playback time will be described.

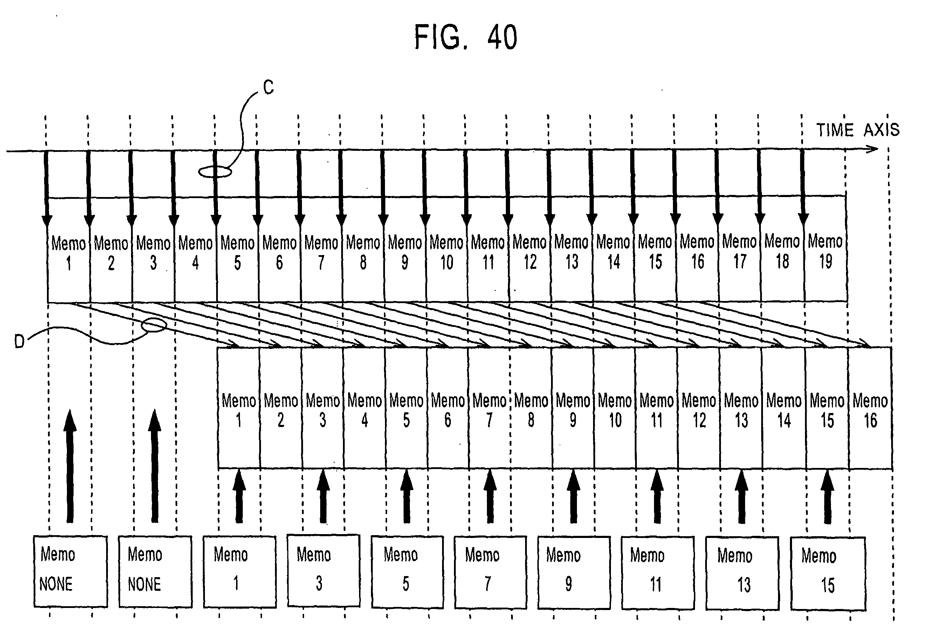

Fig. 40 is a diagram showing processing executed by the playback application program 86 for obtaining an elapsed playback time. An arrow designated as C in Fig. 40 indicates timing for the playback application program 86 to send audio data to the audio-data processing program 83. An arrow designated as D in Fig. 40 indicates timing for the audio-data processing program 83 to supply audio data to the sound card 18.

In the audio-data processing program 83, the playback data buffer 109 and the write data buffer 111 are provided. Thus, when the audio-data processing program 83 is used, the playback application program 86 is not allowed to know an accurate elapsed playback time only from audio data sent. That is, the audio data supplied by the playback application program 86 to the audio-data processing program 83 is newer audio data compared with audio data currently being output from the sound card 18.

The playback application program 86, when transferring audio data to the audio-data processing program 83, writes a memo to the playback information (Fig. 22) of the header section shown in Fig. 21. The content of the playback information is arbitrary depending on processes for playback. For example, the playback application program 86 writes time information indicating an elapsed playback time so that a playback time can be recognized later.

The playback application program 86 obtains the playback information (memo) attached to the audio data to be written to the sound card 18 (audio data immediately before writing) from the audio-data processing program 83, for example, by polling.

The playback application program 86 displays an elapsed playback time based on the time information indicating an elapsed playback time, included in the playback information obtained.

Accordingly, the playback application program 86 is allowed to display an elapsed playback time that is equal to an elapsed playback time of a musical piece being currently listened to (output).

As described above, according to the present invention, control of audio hardware such as the sound card 18 and the HDD 14 becomes a blackbox by the audio-data processing program 83. Thus, the recording application program 85 and the playback application program 86 need not control audio hardware individually.

Furthermore, since the audio-data processing program 83 executes processing peculiar to audio data, for example, processing conforming to the IEC 60958 Standard, the recording application program 85 for recording audio data or the playback application program 86 for playing back audio data need not execute processing peculiar to audio data. Furthermore, the audio-data processing program 83 analyzes information included in audio data conforming to the IEC 60958 Standard and stores the result of analysis in structured audio data, and supplies the structured audio data to the recording application program 85. Thus, the recording application program 85 can be implemented with improved ease.

For example, when audio data read from a CD is being recorded, it requires empirical know-how to detect an interval between musical pieces by analyzing a subcode Q included in the audio data. Thus, it is difficult to detect intervals between musical pieces with high accuracy. Use of the audio-data processing program 83 allows intervals between musical pieces to be detected accurately and readily without such know-how.

Furthermore, since the audio-data processing program 83 converts audio data supplied from the playback application program 86 into audio data conforming to the IEC 60958 Standard, the playback application program 86 need not execute processing for setting information other than audio sample word in audio data, such as preambles, V bits, and C bits.

That is, the audio-data processing program 83 entirely takes charge of analysis and calculation of audio data conforming to the IEC 60958 Standard, and provides copyright protection and processing associated with rules obvious for digital audio apparatuses to the recording application program 85 and the playback application program 86. Thus, the recording application program 85 and the recording application program 85 can be readily developed in a short period.

The recording application program 85 or the playback application program 86 is allowed to obtain a recording time or a playback time using information included in structured audio data.

Apart from the read data buffer 102 for reading audio data from the sound card 18, the audio-data processing program 83 has the record data buffer 104 for sending audio data to the recording application program 85. Thus, sound dropout during recording is reduced. Furthermore, apart from the write data buffer 111 for supplying audio data to the sound card 18, the audio-data processing program 83 has the playback data buffer 109 for receiving audio data from the playback application program 86. Thus, sound skipping during playback is reduced.

The playback application program 86 or the recording application program 85 is allowed to control the audio-data processing program 83 during recording or playback for start, stop, and suspending operations. Thus, recording and playback can be controlled delicately.

Since the audio-data processing program 83 registers the single recording application program 85 and supplies audio data only to the recording application program 85 registered, even if a plurality of processes is activated, sound dropout due to interception of audio data is prevented during recording. Similarly, the audio-data processing program 83 registers the single playback application program 86 and receives audio data only from the playback application program 86 registered. Thus, even if a plurality of processes is activated, sound skipping due to interruption by irrelevant audio data is prevented during playback.

Although it has been described that the recording/playback apparatus according to the present invention executes the audio-data processing program 83, the recording application program 85, and the playback application program 86, alternatively, a plurality of apparatuses may each execute one of the audio-data processing program 83, the recording application program 85, and the playback application program 86 individually. In that case, audio data is sent via a network.

Furthermore, since the audio-data processing program 83 is allowed to exchange messages with other program via sockets, for example, when a problem arises during development or after sales, the audio-data processing program 83 may be updated via a network.

Although the HDD 14 and the CD 91 have been mentioned as examples of a content recording medium for recording audio data thereon, without limitation to the HDD 14 and the CD 91, content may be recorded on a content recording medium such as a magnetic disc 31, an optical disc 32, a magneto-optical disc 33, or a semiconductor memory 34, and content recorded on the content recording medium such as the magnetic disc 31, the optical disc 32, the magneto-optical disc 33, or the semiconductor memory 34 may be played back.

The series of processing may be executed by hardware or by software. When the series of processing is executed by software, programs constituting the software are installed from a recording medium onto a computer embedded in special hardware, or a general-purpose computer or the like that is capable of executing various functions with various programs installed thereon.

As shown in Fig. 1, the recording medium may be a package media having recorded programs thereon for distributing programs to a user separately from a computer, such as the magnetic disc 31 (including a flexible disc), the optical disc 32 (including a CD-ROM (compact disc-read only memory) and a DVD (digital versatile disc)), the magneto-optical disc 33 (including an MD (mini-disc®), or the semiconductor memory 34. Alternatively, the recording medium may be a ROM that is not shown or the HDD 14 having programs recorded thereon, distributed to a user as included in a computer.

The programs for executing the series of processing described above may be installed on a computer via wired or wireless communication medium such as a local area network, the Internet, digital satellite broadcasting, via an interface such as a router or a modem as required.

In this specification, steps included in the programs stored on a recording medium may include processing executed in parallel or individually, as well as processing executed sequentially in the order described.

In this specification, a system refers to the entire apparatus composed of a plurality of apparatuses.

### Industrial Applicability

According to the present invention, in an apparatus controlled by a multitask operating system that does not ensure a turnaround time, content supplied as a stream can be recorded with improved ease and without causing a loss.

## Claims

1. A recording apparatus for recording first content data on a recording medium under control of an operating system, the first content data being input as a stream, the recording apparatus comprising:
data-reception controlling means for controlling reception of the input first content data under control of a first program that is controlled by the operating system;
data-recording controlling means for controlling recording of the input first content data on the recording medium under control of a second program that is controlled by the operating system; and
transferring means for receiving, under control of a first process that is controlled by the operating system, the first content data specified to be transferred to the data-recording controlling means from the data-reception controlling means, and for controlling transfer of the first content data under control of a second process that is controlled by the operating system, the second process controlling transfer only while data to be transferred to the data-recording controlling means is being received and the second process being terminated immediately upon completion of the transfer.

2. A recording apparatus according to Claim 1,
wherein the transferring means is a socket for controlling transfer of data from a program that is controlled by the operating system to another program that is controlled by the operating system.

3. A recording apparatus according to Claim 1,
wherein the data-reception controlling means comprises:
first storing means for storing the input first content by units of a first data length;
second storing means for storing the first content data by units of a second data length that is different from the first data length; and
data transferring means for converting the first content data stored in the first storing means by units of the first data length into units of the second data length and transferring the content data having been converted to the second storing means;
and wherein the data-reception controlling means outputs the first content data stored in the second storing means to the transferring means by units of the second data length.

4. A recording apparatus according to Claim 1,
further comprising extracting means for extracting control information included in the input first content data.

5. A recording apparatus according to Claim 4,
wherein recording of the input first content data on the recording medium is inhibited based on the control information extracted by the extracting means.

6. A recording apparatus according to Claim 4,
further comprising processing means for executing predetermined processing on the input first content data based on the control information extracted by the extracting means.

7. A recording apparatus according to Claim 1,
wherein the data-reception controlling means further controls sending of the input first content data in the form of second content data that is stream data having a data format different from a data format of the first content data.

8. A recording apparatus according to Claim 1,
wherein the transferring means further comprises registering means for registering the first program for controlling the data reception controlling means that has requested sending of data to the transferring means,
and wherein the transferring means rejects a request for sending content data from other reception controlling means controlled by a program that is different from the first program.

9. A recording apparatus according to Claim 8,
wherein the registering means of the transferring means further registers the second program for controlling the data-recording controlling means that has requested reception of data from the transferring means, and wherein sending of data from the data-reception controlling means is permitted only when the second program has been registered.

10. A recording method for recording first content data on a recording medium under control of an operating system, the first content data being input as a stream, the recording method comprising:
a data-reception controlling step of controlling reception of the input first content data under control of a first program that is controlled by the operating system;
a data-recording controlling step of controlling recording of the input first content data on the recording medium under control of a second program that is controlled by the operating system; and
a transferring step of receiving, under control of a first process that is controlled by the operating system, the first content data specified to be transferred to the second program from the first program, and of controlling transfer of the first content data under control of a second process that is controlled by the operating system, the second process controlling transfer only while data to be transferred to the second program is being received and the second process being terminated immediately upon completion of the transfer.

11. A recording method according to Claim 10,
wherein the second process is a socket that controls transfer of data from a program that is controlled by the operating system to another program that is controlled by the operating system.

12. A recording method according to Claim 10,
wherein the first program stores the input first content data in first storing means by units of a first data length,
wherein the first program stores the first content data in second storing means by units of a second data length that is different from the first data length,
wherein the first program converts the first content data stored in the first storing means by units of the first data length into units of the second data length, and transfers the first content data having been converted to the second storing means,
and wherein the first program outputs the first content data stored in the second storing means to the first process by units of the second data length.

13. A recording method according to Claim 10,
further comprising an extracting step of extracting control information included in the input first content data.

14. A recording method according to Claim 13,
wherein recording of the input first content data on the recording medium is inhibited based on the control information extracted in the extracting step.

15. A recording method according to Claim 13,
further comprising a processing step of executing predetermined processing on the input first content data based on the control information extracted in the extracting step.

16. A recording method according to Claim 10,
wherein the second program further controls sending of the input first content data in the form of second content data that is stream data having a data format different from a data format of the first content data.

17. A recording method according to Claim 10,
wherein the second process further comprises a registering step of registering the first program that has requested sending of data to the second process,
and wherein the second process rejects a request for sending content data from a program that is different from the first program.

18. A recording method according to Claim 17,
wherein the second process further registers the second program that has requested reception of data from the transferring step, and wherein the second process permits sending of data from the first program only when the second program has been registered.
